(19) Europäisches Patentamt European Patent Office Office européen des brevets

(11) **EP 3 908 785 B1**

(12) **EUROPEAN PATENT SPECIFICATION**

(45) Date of publication and mention of the grant of the patent:
**26.02.2025 Bulletin 2025/09**

(21) Application number: **19701011.9**

(22) Date of filing: **11.01.2019**

(51) International Patent Classification (IPC):
*G01J 5/02* (2022.01)    *G01J 5/04* (2006.01)
*G01J 5/07* (2022.01)    *G01J 5/48* (2022.01)
*G01J 5/80* (2022.01)    *F24C 7/08* (2006.01)
*F24C 3/12* (2006.01)    *G01J 5/00* (2022.01)
*H05B 6/06* (2006.01)

(52) Cooperative Patent Classification (CPC):
**F24C 7/083; F24C 3/126; G01J 5/00; G01J 5/025;**
**G01J 5/04; G01J 5/07; G01J 5/48; G01J 5/485;**
**G01J 5/80; G01J 5/802; H05B 6/062;**
G01J 2005/0077; H05B 2213/05

(86) International application number:
**PCT/GB2019/050083**

(87) International publication number:
**WO 2020/144445 (16.07.2020 Gazette 2020/29)**

(54) **MONITORING COOKING APPLIANCES**

ÜBERWACHUNG VON KOCHGERÄTEN

SURVEILLANCE D'APPAREILS DE CUISSON

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**17.11.2021 Bulletin 2021/46**

(73) Proprietor: **Pippa Technologies Limited**
**London, SW6 3HH (GB)**

(72) Inventor: **BAILEY, Samuel Gerard**
**London, Greater London SW6 3HH (GB)**

(74) Representative: **Greenwoods**
**Queens House**
**55-56 Lincoln's Inn Fields**
**London WC2A 3LJ (GB)**

(56) References cited:
EP-A1- 2 748 534    EP-A1- 3 258 175
EP-A1- 3 344 007    EP-A2- 1 505 350
US-A1- 2005 265 423    US-A1- 2016 169 744

## EP 3 908 785 B1

**Description**

This invention relates to a method for monitoring a cooking appliance.

**BACKGROUND**

Cooking hobs may be stand-alone devices, devices incorporated into work surfaces, or devices being parts of stoves, ovens, or other equipment. The present invention is not limited to or by the environment of the cooking hob.

Hob fires are by far the single largest cause of dwelling fires, accounting for over 50% of fires in the UK and 40% in the USA.

Hob fires are typically caused by unattended pans, which overheat if left on the hob. For example, hob fires can be caused by a pan which boils dry and overheats, or by a frying pan or deep fat fryer, which if left on a high heat can reach the auto-ignition point of the oil in the pan. Fires can also be caused by tea towels or other combustible items being left on or close to the hob.

Most homes will have a smoke alarm or a heat alarm fitted in the kitchen. However by the time these trigger, the fire is under way, and may already be too dangerous for a householder to tackle. Hob fires frequently result in the householder having to evacuate the building requiring the fire brigade to tackle, resulting in substantial damage to the building and the risk of death or injury to occupants of the building.

Prior to hob usage leading to a fire, there is often a time period of around 1 to 3 minutes between the pan exceeding the temperature it would experience during normal cooking, and the pan reaching a temperature at which there is a risk of fire. In the following, this is referred to as a pre-ignition situation. If this condition is detected, and alarm triggered alerting the user, they can simply turn off the hob or remove the pan from the heat, or the heat to the hob can be turned off automatically.

Being able to accurately discriminate between a pre-ignition and ignitions situations and normal cooking, and providing an alert, thus has substantial benefit for reducing the risk of fires on the hob.

Typical conditions leading up to a hob fire include but are not limited to:

Oil fire - User places saucepan on hob with oil in. Pan is heated up. Temperature rises until the oil reaches a temperature suitable for frying. If the pan is not attended by the user, either by reducing the heat or adding food to cool the oil, the temperature will continue to rise. The temperature will initially reach the smoke point of the oil, and if still unattended will reach the auto-ignition temperature of the oil and a fire will start.

Dry pan fire - User places saucepan on hob with water or water based food in it e.g. soup or stew. Pan is heated up. Temperature rises until the water reaches boiling point Temperature stabilises at around the boiling point of water (100°C). Pan is not attended to by the user and water from the pan continues to evaporate. When no more water is present to maintain the 100°C temperature, the temperature starts to rise. When the contents of the now dry pan reaches the combustion temperature of the remaining food, then a potential hob fire arises.

Combustible materials fire. User places a combustible material (e.g. tea towel) in the vicinity of the hob. The hob heats up and ignites the material and a fire is started.

US20150196161A1 describes a method for detecting dangerous cooking by monitoring the temperature as measured by a single heat sensor above the hob and triggering above a certain temperature or rate of change or temperature. However as this only uses a single sensor, the sensor sees an average temperature of the region above the hob. This is means that it effectively measures the total heat output of the hob. The heat output of the hob can be high if a user is cooking something that requires the hob to be on high, e.g. if using a wok, even if the temperature of the wok itself is below a safe level. It can also alarm when the rate of heat measured rises rapidly, even if the temperature is low. This can occur if a warm pan is placed on the hob, as the temperature will rise more rapidly than if the pan had been on the hob and had been heated up, however the temperature of the pan itself can be quite low and consequently safe with regard to fire risk. The system thus false alarms very frequently, and is likely to be ignored or removed by a user to avoid annoyance. This reduces its effectiveness in preventing fires.

A study by the Consumer Product Safety Commission in the United States (https://www.cpsc.gov/s3fs-public/pdfs/3512ba2b.pdf) into detecting pre-ignition conditions of cooking related fires concluded that measuring the temperature of the pan bottom or pan contents was the best indicator that a pre-ignition situation existed. They concluded that a pan bottom temperature of 386°C to 494°C was required to cause ignition (depending on the pan contents) and that holding the pan temperature below 315°C to 330°C would prevent 99% of ignitions (the lower number is to allow for the thermal inertia - a pan may continue to increase in temperature after the heat is switched off as energy from the hot plate continues to be transferred to the pan).

However measuring the temperature of the base of a pan is difficult. Either the pan must have a thermocouple in the base, which would require the use of specifically modified pans, or the hob must have a sensor built in. Pans exist with sensors in but they do not tend to be a commercial success.

Some electric hobs have sensors built in which can automatically limit or cut out over certain temperatures. However these are not ubiquitous and users without these hobs either have to upgrade their hob or be exposed to the increased fire risk.

It has been proposed to use thermal sensors with cooking hobs.

EP3336436 discloses the use of cameras and/or infrared sensors to monitor cooking hobs. DE102014220273 discloses the use of infrared sensors to determine cooking temperatures of food on hobs.

WO2013/026766 discloses a method used to set up an infrared monitoring device for use with an unknown hob by assigning pixels to cooking points based on temperature.

US2005/0265423 discloses a method of processing visible and infrared image signals to ascertain the state of a cooking station.

WO2018/163073 discloses the use of thermal images to determine whether a cooking hob has been left unattended. EP3258175 A1 relates to a cooking support method that uses thermal imaging cameras to look for possible boiling over by detecting the level of liquid.

The applicant has realised that there is a need for cooking hob monitoring methods and systems that enable the monitoring of cooking hobs to provide appropriate early warning of conditions that may lead to fire, and that are responsive to different types of cooking activity so that the warnings are tailored to the nature of cooking.

Applicant's co-pending GB1711491.9 describes a method to detect pre-ignition conditions on a cooking hob comprising: analysing an infrared image of a hob to locate hot plates, burners or pans on the image; classifying the hot plates, burners or pans into likely cooking types; applying different conditions to each cooling type, and alerting or recording of pre-ignition conditions when the conditions are met

The present invention provides methods, systems, and devices for monitoring cooking hobs as set out in the appended claims.

## SUMMARY

In one option, the present invention provides a method according to claim 1. In another option of the present invention, classifying further comprises classifying based on shape of that region.

In another option of the present invention, the characteristic includes one or more of: (i) presence of cookware; (ii) presence of a lid on cookware, (iii) nature of material of cookware and/or cookware lid, (iv) position of cookware, (v) presence of a heat source, (vi) position of cookware relative to a heat source, (vii) presence of cooking hob surface below a threshold temperature, (viii) rate of change of temperature of cooking hob surface below a threshold temperature, (ix) presence of cooking hob surface above a threshold temperature, (x) presence of a user, (xi) position of a user relative to heat sources and/or relative to cooking hob surface above a threshold temperature, (xii) presence of vapour/fumes from cooking, (xiii)presence of objects other than cookware, (xiv) type of cooking hob.

In a further option of the present invention, the relevant criteria include conditions attributable to any of: (I) Normal operation, (II) Completion of cooking, (III) Pre-ignition conditions, (IV) Risk of injury and/or (V) Fire. In an additional option of the method of the present invention, the relevant criteria include one or more of: (VI) acceptable overall temperatures for that region, (VII) acceptable differences in temperature within that region, (VIII) acceptable rates of change of temperature, (IX) acceptable overall fluctuations in temperature for that region, (X) acceptable fluctuations in temperature within that region, (XI) acceptable time exposed to a predetermined temperature or predetermined range of temperatures, (XII) changes in shape of that region, (XIII) criteria based on temperature history of that region, (XIV) criteria based on type of heat source present in the hob, (XV) criteria based on user presence and/or (XVI) criteria provided as relevant to cooking a selected foodstuff.

In another options of the present invention, the predetermined responses include one or more of: (i) provision of visible indicators of condition of that region, (ii) provision of audible indicators of condition of that region, (iii) provision of haptic indicators of condition of that region, (iv) transmission of information concerning that region to one or more specified communication devices, (v) transmission of information concerning that region to a remote location, (vi) controlling heat generated by a heating source in the cooking hob, (vii) disabling the cooking hob, and/or (viii) activating fire prevention and/or suppression measures.

The present invention also relates to systems as defined in the claims The following non-limitative description exemplifies the claimed invention, but is not intended to limit the scope of the claims.

## BRIEF DESCRIPTION OF THE DRAWINGS

FIG. 1: A schematic representation of an arrangement of a thermal imaging sensor and hob.

FIG. 2: A schematic representation of an alternative arrangement of thermal imaging sensor and hob wherein the thermal imaging sensor is disposed displaced from an axis extending vertically from the centre of the hob.

FIG. 3: A graphical representation of the temperature profile of an electric hob as a function of time.

FIG. 4: A graphical representation of the temperature profile of a gas hob as a function of time.

FIG. 5: A graphical representation of the temperature profile of a pan of baked beans as they are left on a hob as a function of time.

FIG. 6: A thermal contour map showing an example wherein a heat source is larger than cookware.

FIG. 7: A thermal contour map taken using a low resolution thermal imaging sensor of a gas burner.

FIG. 8: A graphical representation of a change in temperature as a function of time for a pixel viewing the centre of a gas burner.

FIG. 9: A thermal contour image of a pan of boiling water on a hob.

FIG. 10: A schematic representation of an event where more than one piece of cookware is placed on the hob such that the cookware in the field of view of the sensor/camera can overlap.

FIG. 11: A graphical representation of the temperature profile of a pan as a function of pixel.

FIG. 12: A thermal contour map for an exemplary scenario.

FIG. 13: A schematic representation of the hob showing an idealised orthogonal view of the hob.

FIG. 14: A schematic representation of the hob showing the hob as viewed using an appropriate transform.

FIG. 15: A graphical representation of the temperature profile as measured by a pixel viewing the centre of cookware as a function of time.

FIG. 16: A flow diagram showing operation of an option of the method of the present invention.

FIG. 17: A thermal contour map showing the temperature image of a frying pan just after the oil started to smoke.

FIG. 18: A graphical representation of the temperature profile of the centre of the frying pan of Fig. 17 as a function of time.

FIG. 19: A graphical representation of the temperature profile of a piece of cardboard on fire on a hob as a function of time.

FIG. 20: A graphical representation of the temperature profile of a tea towel on fire on a hob as a function of time.

## DETAILED DESCRIPTION

This disclosure describes methods and systems for monitoring the use of a cooking hob, and typically utilises a sensor that can be fitted or positioned proximate to a cooker, cooker hood, or any other surface proximate a cooking hob, and detect at least one condition on the hob. The sensor may be fitted with the hob, or may be retro-fitted to co-operate with an existing hob.

The conditions detected can include any of (but are not limited to): normal operation, completion of cooking, pre-ignition, risk of injury, and/or fire.

Typically, any of these conditions will follow a recognisable pattern if viewed in the thermal infrared part of the electromagnetic spectrum. Thermal imaging sensors detect the surface temperature of objects within their field of view. However, to mount a thermal imaging sensor where it can view the base of a piece of cookware requires it to be mounted on the surface of the hob and look upwards, where it is likely to be damaged, splashed or exposed to high temperatures.

For the purposes of the present invention, the expression "hob" or "cooking hob" is used to define either or both of a gas hob or an electric hob (e.g. induction hob, ceramic hob or solid plate hob). Also, the expression "sensor" is used interchangeably with the terms "infra-red sensor", "thermal imaging camera", infra-red camera" and "camera". Although reference is made to circular pans/cookware, any shape cookware may be used.

The method disclosed is as set out in claim 1.

*Accessing images*

This patent describes a method for monitoring the use of a hob. One step of this method is to access images produced by at least one thermal imaging sensor.

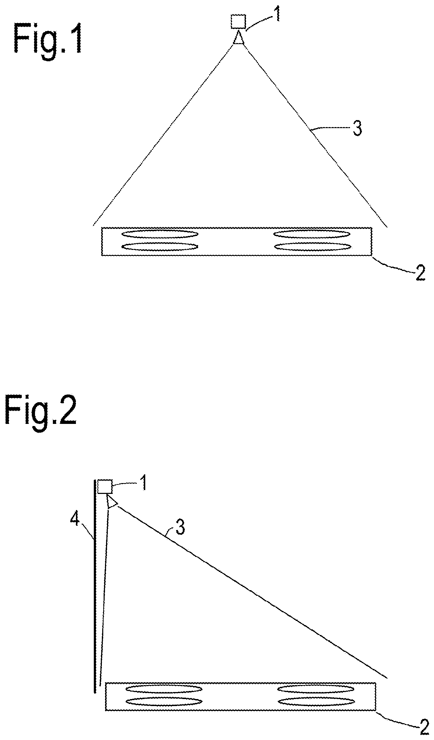

Figs. 1 and 2 show possible layouts for a thermal imaging sensor 1 mounted above a hob 2. The field of view 3 is such that for a typical mounting height 4, the hot plate(s) are within the field of view. Although only a single thermal imaging sensor is shown, a plurality of thermal imaging sensors can alternatively be employed. Fig. 2 shows another possible layout wherein the thermal imaging sensor is disposed displaced from an axis extending vertically from the centre of the hob. Although a single thermal imaging sensor is shown in the figures, it is within the scope of the present invention to employ a plurality of thermal imaging sensors wherein at least one thermal imaging sensor is disposed displaced from an axis extending vertically from the centre of the hob. The at least one thermal imaging sensor will have a series of pixels, each of which will measure the average radiant surface temperature of whatever is within the field of view of that pixel. The result is a 2D image of the hob, with a pixel measuring temperature rather than colour. The image(s) is(are) processes subsequent to accessing the image(s).

Testing with a thermal imaging sensor mounted above the hob shows that it is possible to detect different conditions attributable to the different pixels/regions.

The conditions vary depending upon the cooking type and typically include (but are not limited to): normal operation, completion of cooking, pre-ignition conditions (e.g. frying pan overheats, cookware with water or other water based food in boils dry, hob left on and other combustion e.g. tea towel), risk of injury and/or fire.

While a simple threshold on the maximum temperature detected would detect many conditions other than "normal operation", because the bottom of the cookware temperature is the hottest part, and the part where ignition will likely take place, it is necessary to adjust a predetermined response depending on the cooking type and/or the contents of the cookware.

*Processing images*

Another step in the method for monitoring the use of a cooking hob is processing one or more of the plurality of infrared images to distinguish different regions of the cooking hob. The regions may be distinguished based on their temperature. Alternatively, or additionally, regions may be distinguished by their shape. The step of processing can be undertaken by at least one data processor. The processing may be of single images [e.g. to identify different regions by temperature or by shape] or of multiple images [e.g. to identify regions showing different changes in temperature or changes in shape]. Processing the images may be done in parallel with, or in advance of, their classification as described in the next step.

### *Classifying regions*

Another step in the method of monitoring the use of a cooking hob is to identify and/or ascribe a characteristic to at least one region of the at least one image which has been processed. In order to do this, at least one of the regions identified by processing the at least one image must be classified. At least one of said regions is classified based on temperature to ascribe a characteristic to that region. Classifying based on temperature may also comprise classifying based on changes in temperature (and/or rate of change of temperature). Optionally, or additionally, classifying may comprise classifying based on shape and/or changes in shape of that region.

The characteristics may include one or more of: type of cooking hob, presence of cookware, presence of a lid on cookware, nature of material of cookware and/or cookware lid, presence of heat source, position of cookware, position of cookware relative to a heat source, presence of cooking hob surface below a threshold temperature, rate of change of temperature of cooking hob surface below a threshold temperature, presence of cooking hob surface above a threshold temperature, presence of a user, position of a user relative to heat sources and/or relative to cooking hob surface above a threshold temperature, presence of vapour/fumes from cooking, and/or presence of objects other than cookware.

The following is an example of how to classify at least one of the regions to ascribe a characteristic (type of hob) to that region. Gas hobs and electric hobs have noticeable differences in the way that the temperature behaves when they are switched on. Gas hobs, when viewed in the infrared spectrum, tend not to appear to have a temperature higher than 320°C on full power. Electric hot plates, on the other hand, can appear to have temperatures up to 400°C or higher, and halogen hobs can appear to have temperatures up to 450°C or higher.

Optionally, knowledge of the hob type can be determined automatically by measuring the maximum observed temperature of the hob either with or without cookware, and/or by measuring the fluctuation in temperature of the hob with or without a hob. In some options, a circle finding algorithm (with or without a transformation to correct for elliptically-shaped images of circular cookware) can be used to locate circles and non-circles, i.e. non cookware regions, in order to measure the actual hob temperature when cookware is on the hob.

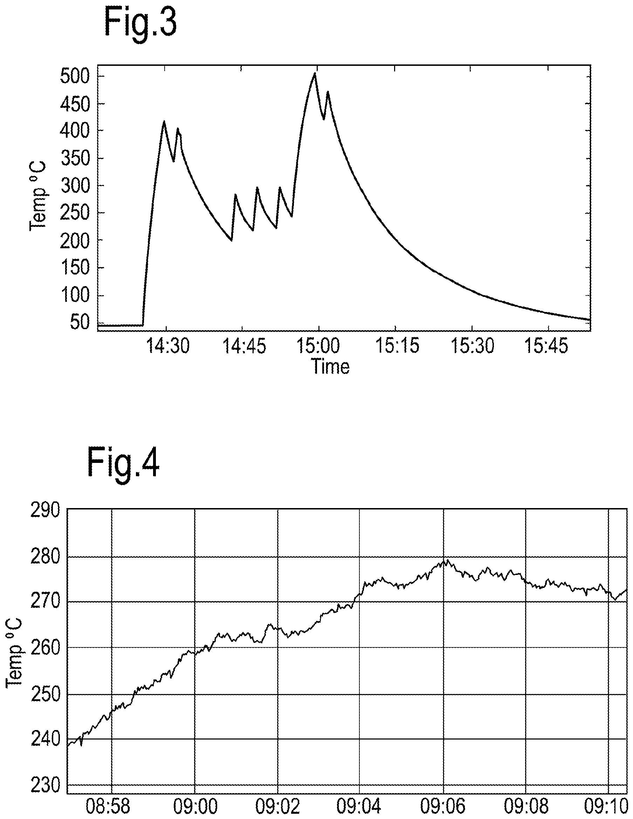

Fig. 3 shows the temperature of an electric hotplate type hob (when left on) with no cookware as a function of time. The temperature gradient for this particular electric hotplate during heat up is typically 1-1.5°C per second. The temperature profile is smooth and there is a characteristic sawtooth in the temperature once the hob has reached the desired set point and the hob temperature controller turns the hob on and off to modulate the heat output By measuring the smoothness of the temperature, or more specifically the local smoothness of the temperature, e.g. using a curvature filter such as convolving the signal with a filter such as [-1 2 -1] or other filter that implements a similar measure of the curvature of the signal, with smoothness being inversely proportional to curvature, and comparing it to a threshold, it is possible to determine whether the hob is electric. Alternatively, determining whether a hob is an electric hotplate type hob can be done by looking for a sawtooth pattern that is smooth locally, but shows a sudden change in gradient with a period that could vary from a small number of seconds, say 5, up to 1-20 minutes.

Fig. 4 shows the temperature of a gas hob when left on (with no cookware) as a function of time. There is no visible sawtooth wave pattern but the line appears to fluctuate. Measuring the (local) smoothness as above will usually yield that the curvature is high. By comparing the smoothness to a predetermined threshold, e.g. 0.1°C/second$^2$ or as low as 0.001°C/second$^2$ or as high as 1°C/second$^2$, can help determine the hob type, i.e. if it is higher than the predetermined threshold the hob is likely gas.

Based on either a fixed set of parameters, or on a set of parameters based on knowledge of the hob type which has either been classified as above, or a priori knowledge of the hob type has been used to set them, we can determine if the hob is left on.

If the temperature suddenly changes by an amount above a predetermined threshold e.g. 10°C, or the hot region can be seen to move across the field of view because the coordinates of the region with the given temperature change, then the cookware has likely been moved or removed from the hob. There is likely then a visible hot region where the cookware was previously located, indicating the warm hob underneath the now moved cookware.

If the temperature of the hob then fails to start to cool down within a predetermined time period, e.g. 5 seconds, or up to 20 minutes, then the hob is likely left on. Furthermore if the temperature of the region follows the characteristics of the hob type described above, then a hob left on can be classified more distinctly to avoid false alarms if cookware is left on the hot hob intentionally.

If the hob is left on, and fails to be switched off within the predetermined time period, which could be 10-20 seconds, or up to 10-20 minutes, then a predetermined response may be sent to the user. The predetermined response may at least one of a remote alert, an audible alert, a visual alert, and/or a haptic alert Switch off may be determined by the gradient of the temperature going negative for a certain predetermined period of time, e.g. 2-10 seconds, or up to 1 minute.

As the device employed to perform the method may not have access to mains power, it is preferable that it draws low power to extend battery life, or be able to run on energy harvesting technology. The device may therefore stay in a sleep state to reduce power consumption, and then wake up intermittently e.g. once per minute, but maybe as low as once every 10 seconds or as high as every 5-10 minutes or any period in between. When it wakes up it may take a single heat measurement, either using the at least one infra-red sensor, or a secondary heat sensor, and if the measured temperature does not indicate the hob is in use, go back to sleep. The wake interval could be varied by time of day, for example being more frequent at meal times and less frequent in between.

The nature of the material (e.g. the emissivity) of the cookware and/or cookware lid may be of importance when the material is reflective (e.g. polished stainless steel) as this can impact the temperature reading of the thermal imaging sensor. Also, reflections from sources other than the cookware may be a characteristic, e.g. if a mirror is shining light onto a hob surface prior to the heat source being used, this may be indicative of "background energy" and can thus be treated as "background". A user may also input, via an input device, the nature of the material of the cookware, e.g. a polished steel pot

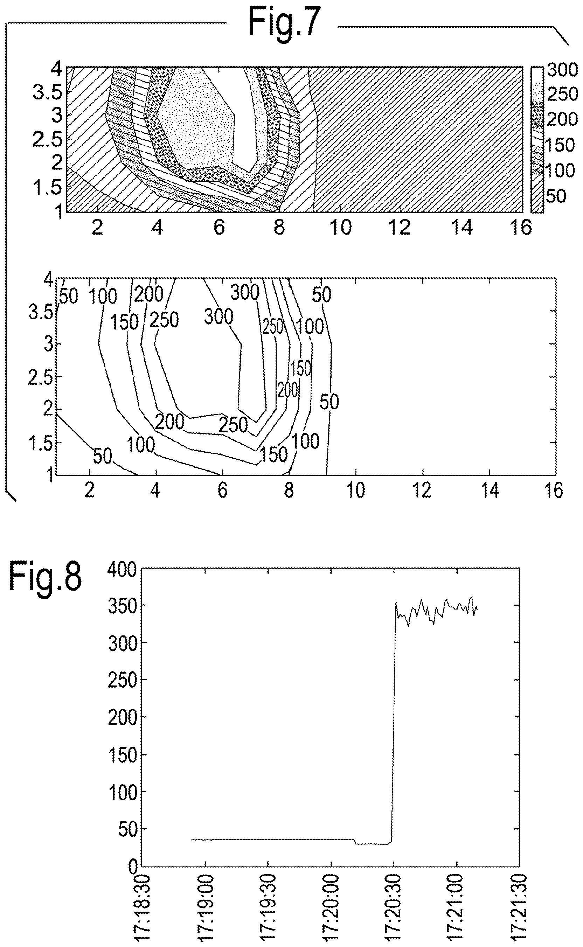

The following example is where the ascribed characteristic is the presence of cookware. In the example of a gas hob, when the hob is lit, if there is no cookware on the hob, there follows a sudden rise in temperature in the region of the lit gas burner. The characteristic of the absence of cookware can be identified. Fig. 7 shows a thermal contour map taken using a low resolution thermal imaging sensor of a gas burner. The change in temperature as a function of time for the pixel viewing the centre of the burner is shown in fig. 8. The temperature reaches a temperature of around 350°C almost immediately and fluctuates +/- 15°C. If this condition persists without a cooling when cookware is placed on the hob, the deviation from the relevant criteria of (i) acceptable time exposed to a predetermined temperature or predetermined ranges of temperature and (ii) acceptable fluctuations within that region can indicate the characteristic of a presence of a heat source in the absence of cookware (i.e. a gas burner has been left on). It can also be used to locate the position of the burners within the field of view. An electric hob will have a similar profile, but with a longer warm up time and a likely larger region of heat

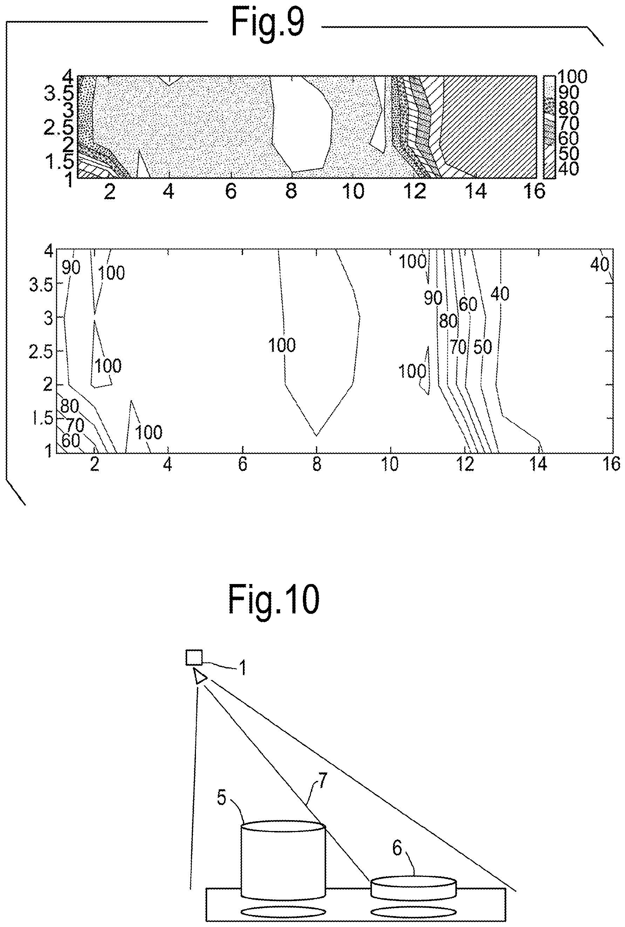

Fig. 9 shows the thermal contour image of a pan of boiling water on the hob. The centre of the pan region is fluctuating at around 100°C.

In some options, the at least one region may be classified based on temperature to determine the nature of a cooking operation being performed with cookware, and ascribing the characteristic based on the nature of the cooking operation. In an optional additional step, the method may further comprise storing a history of cooking operations performed with the cookware, and ascribing the characteristic based on the history of cooking operations. In another option, the nature of the cooking operation can be determined by the temperature profile of the at least one image.

Additionally, or optionally, the nature of the cooking operation is determined by one or more of: use of a classifier to infer nature of cooking operation by temperature of that region, and/or changes in temperature of that region, and/or changes in temperature within that region and/or differences in temperature within that region, and/or changes in temperature within that region and/or differences in temperature within that region, or information concerning type of cooking process and/or nature of foodstuff being cooked. In some options, the information concerning type of cooking process and/or nature of foodstuff bring cooked comprises user input information. User input information is information input by a user via a user input device.

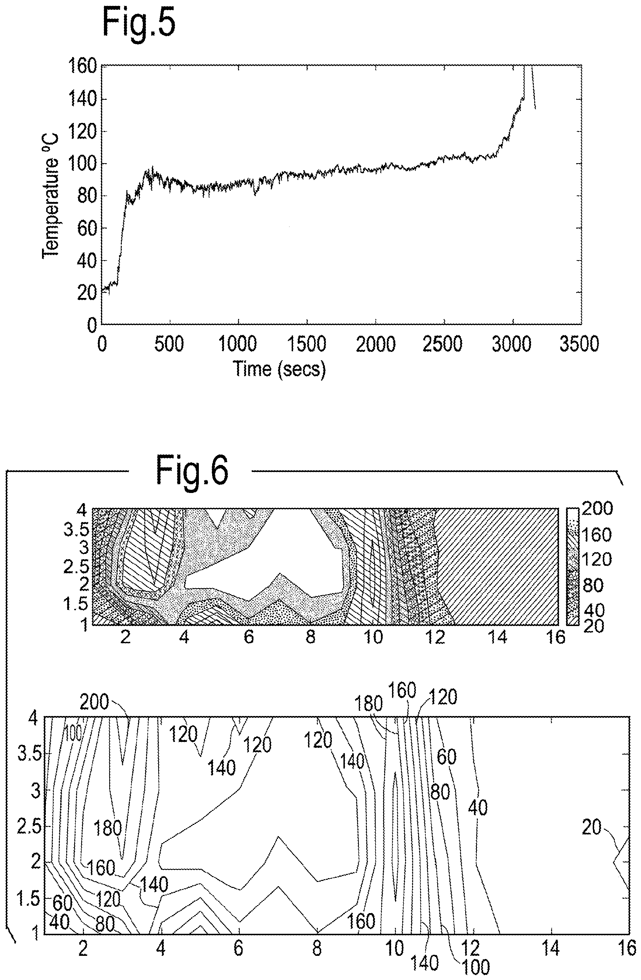

Fig. 5 shows the profile of the temperature of a pan of baked beans as they are left on the hob. Of note is that the beans ignited at around the point marked 3 on the figure, where the temperature, as viewed from above, is around 120°C in the middle of the pan, but because the beans are poor conductors of heat, as will many thicker stews or other sauces be, and the pan was not stirred (as is likely to be a determining factor in causing a case of a dangerous scenario), the temperature at the pan bottom is far higher and reached the temperature necessary to start burning the beans. However 120°C as viewed from above is not a condition other than "normal operation" for a frying pan containing oil as 120°C would not be a deviation from the relevant criteria applicable to that region based on the characteristic. Therefore, the method may identify the appropriate threshold to use based on classifying what the cooking type is. Cooking types/operations that can be classified include, but are not limited to: boiling, simmering, poaching, frying, sautéing, stir-frying, flambéing, searing, braising, stewing, heating (e.g. soups and stews), griddle cooking, pressure cooking, bain-marie cooking, and reduction.

Also, because the user may put a small piece of cookware, e.g. a small pan, on a large heat source, a higher temperature may be visible around the edge of the pan than in the centre of the hob. Fig. 6 shows an example of this where the centre of the pan is 140°C but the pan walls and flames passing up the side of them are >200°C. Whilst this is inefficient, it is not necessarily indicative of a condition other than "normal operation" and would be a nuisance alarm to a user if it prompted a predetermined response based on merely the presence of high temperatures in the field of view.

### *Determining criteria*

Another step of the method for monitoring the use of a cooking hob is determining relevant criteria applicable to the region depending upon characteristic i.e. any of the ascribed characteristics of a region are determined by relevant criteria associated to that region. The relevant criteria may include but are not limited to conditions attributable to any of: normal operation, non-operational, completion of cooking, pre-ignition conditions, risk of injury, and/or fire.

The relevant criteria may include but are not limited to one or more of: acceptable overall temperatures for that region, acceptable differences in temperature within that region, acceptable rates of change of temperature, acceptable overall fluctuations in temperature for that region, acceptable fluctuations in temperature within that region, acceptable time exposed to a predetermined temperature or predetermined range of temperatures, changes in shape of that region, criteria based on temperature history of that region, criteria based on type of heat source present in the hob, criteria based on user presence, and/or criteria provided as relevant to cooking a selected foodstuff.

Changes in shape can be indicative of, for example, cookware such as a pot comprising a liquid which may overspill if boiled, and thus the spillage will change the overall shape of that region as high temperature liquid will extend beyond the original region containing only the pot. The shape of the region can also be indicative of the food type, e.g. a fried egg will be visible in a thermal image (depending on the resolution of the thermal imaging sensor) as, due to the differences in thermal conductivity of egg whites and egg yolk, the egg whites and egg yolk will be at different temperatures.

In some options of the present invention, the relevant criteria are chosen from a library of the relevant criteria. For example, the library of relevant criteria may be in the form of a look up table stored on at least one storage memory device. The processor employed to perform any of the methods disclosed may be communicatively coupled to the at least one storage memory device. In some options, the library of relevant criteria comprises predetermined relevant criteria. Optionally, or additionally, the library of relevant criteria comprises learnt criteria (e.g. machine learnt criteria).

As an example, the criteria may reflect the nature of the foodstuff being cooked and indicate an acceptable maximum temperature, an acceptable time at maximum temperature, and an acceptable total time of cooking. Deviation from these criteria may, for example, indicate: pre-ignition conditions, overcooked food, or an unattended hob respectively.

### *Deviation from criteria*

A further step in the method for monitoring the use of a cooking hob is processing further of the one or more thermal images to determine whether the earlier distinguished region is deviating from its relevant criteria.

From a starting point of all regions being at approximately ambient temperature (<40°C), the hob can be assumed to be in an off or "non-operational condition". This is because, for example, the characteristic of a "presence of a heat source" may have a relevant criteria of "acceptable overall temperatures for that region", whereby the acceptable overall temperatures may be >40°C, and so the deviation from this criteria indicates the condition is attributable to being "non-operational".

If a region of the image rises to a temperature of, e.g. >250°C, within less than a defined period, e.g. 5 seconds, then the characteristic ascribed to that region may be the presence of a heating source (e.g. gas burner can be assumed to have been ignited), and the determined relevant criteria applicable to that condition is that it has "acceptable rates of change of temperature".

Cookware, e.g. a pan, may be placed on the heat source, e.g. a gas burner, in which case the temperature captured by the thermal imaging sensor will change almost instantly to a different temperature which now depends on the temperature of the pan. This region of that image would be classified to ascribe the characteristic "presence of cookware" by the rapid change in temperature falling within the "acceptable rates of change of temperature" criteria.

If the temperature stays above a threshold indicative of a hob being on, but below the cookware temperature encountered during the "normal operation" condition, e.g. a range centred on approximately 300°C (but may be lower e.g. 250°C or higher e.g. 350-400°C), for a time period above a threshold, then one or more predetermined responses where that region deviates from its relevant criteria are provided.

*Predetermined responses*

The predetermined responses may include one or more of: provision of visible indicators of condition of that region, provision of audible indicators of condition of that region, provision of haptic indicators of condition of that region, transmission of information concerning that region to one or more specified communication devices, transmission of information concerning that region to a remote location (e.g. fire services or the location of the carer of an elderly user), controlling heat generated by a heating source in the cooking hob, disabling the cooking hob, and/or activating fire prevention and/or suppression measures.

A visible indicator can be one or more of at least one display screen and/or at least one light source, e.g. an LED light source. An audible indicator can be one or more of a loudspeaker and/or any other source of sound. A haptic indicator includes any indicator that recreates the sense of touch by applying any of forces, vibrations or motions to the user. Transmission of information includes communication by any means known in the field or yet to be developed, e.g. radio link, Local Area Network connection or LAN such as Wi-Fi, Zigbee, Z-Wave or Bluetooth, or a Wide Area Network such as GSM, SigFox, LoRa or other communication. A communication device may be any device for communications, e.g. a smartphone, a tablet, a PC, a head-mounted device (e.g. virtual reality headset or augmented reality headset), a virtual assistant (e.g. Alexa, Siri, and the like) and/or a chatbot or any other communication device known or yet to be developed.

The heat generated by a heating source in the cooking hob can be controlled by, in the case of an electric hob, by reducing, increasing or cutting power to the hob, and/or in the case of a gas hob, by reducing, increasing or cutting the flow of fuel to the hob. A fire prevention method may include the activation of a sprinkler system, gaseous fire suppression agents, wet and dry chemical agents, water, and/or fire extinguisher.

In an optional step of the method for monitoring the use of a cooking hob, the predetermined responses vary according to whether the presence of a user is detected. The predetermined response may be combined with information from a presence detector of a type known in the field e.g. a Passive Infrared Motion sensor directed in front of the stove associated with the cooker, which indicates whether there is a person attending the stove. If a person is present, the predetermined response may be suppressed or delayed. If no person is detected then the alarm may be sounded immediately or after a shorter timeout This sensing logic will also aid in detecting other fires on the hob e.g. burning tea towels. The presence detector may be the at least one thermal imaging sensor, such that movement or placement of a user's hand in the field of view of the at least one thermal imaging sensor indicates presence of a user. The presence of a user's hand may be determined by the temperature of the user's hand which will typically remain approximately the same, and/or the shape of the user's hand which typically comprises four fingers and a thumb (although other variations may also be detectable).

In another option, a hot or cold piece of cookware may be placed on the heat source with the heat source turned on underneath it. In this case a slower rise in temperature in a region of the image will be detectable by the sensor.

*Thresholding*

It may, in some instances, be useful to employ a thresholding technique to differentiate between different objects in the at least one thermal imaging sensor's field of view, e.g. between the side wall of the cookware and the top of the cookware.

In the event that more than one piece of cookware is placed on the hob, the cookware in the field of view of the sensor/camera can overlap. This can mean that a region found by thresholding at a certain temperature can contain more than one piece of cookware. The region will no longer be circular or approximately circular. This is illustrated in Fig. 10. A first piece of cookware, e.g. a deep pan, on a first cooking zone 5 of the hob will overlap with a second piece of cookware, e.g. a second pan, on a second cooking zone 6 of the hob, when viewed by the sensor 1, because the line of sight 7 is obscured, i.e. because the sensor cannot be directly above both pieces of cookware.

A similar effect can also occur if the hob surface itself warms up as the regions between the cookware and/or cooking zones can reach temperatures that could be representative of cooking (e.g. 40°C and higher).

The image will therefore contain several regions close by. For example, there may be two pan top surfaces which we want to differentiate between and measure the temperature of, pan sides which we want to differentiate so as to avoid confusion with the pan top surfaces as these are likely to be hotter than the top surfaces, and regions of the hob surface itself that have warmed up.

Thresholding at a temperature below this would then give incorrect regions for the cookware locations. Thresholding involves replacing at least one pixel with a black pixel (or "blank" pixel) if the image intensity is less than some fixed constant or with a white pixel (or "filled" pixel) if the image intensity is greater than that constant. Here, the image intensity is the image temperature.

Thresholding can be employed to overcome the above issue by a process as follows:

Thresholding the image at a number of different minimum and maximum ranges, e.g. a minimum of 40°C and a maximum of 60°C (i.e. a difference of 20°C between the minimum and maximum). The difference between the maximum and minimum can vary, and be representative of the likely temperature variations across the piece of cookware, typically the difference between the maximum and minimum will be between 1°C and 50°C. The thresholding can span the likely cooking temperature, e.g. between 40°C and 500°C.

Another step may be to find at least one region that is within the temperature regions for example by locating all adjoining pixels that are between a minimum and maximum range, e.g. all adjoining pixels between 90°C and 110°C.

Another step may be to measure at least one property of these regions such that the at least one region may be classified as cookware tops or other objects (such as the hob surface between the cookware or cookware sides). The at least one property may be their area, their eccentricity, their major and/or minor axes, their circularity, and/or their ellipticity.

A further step may be to compare the value(s) of the at least one property to thresholds to determine whether the region has the propert(y/ies) that could be expected of the top surface of cookware; and is/are not the side of a pan or a region of the hob surface. For example, the area must correspond to the diameter of a likely piece of cookware, e.g. pan, sized when scaled for the field of view and distance from the camera. The ratio between the minor and major axes must be higher than a defined value, for example 0.5.

Alternatively, rather than thresholding the image at a series of different levels (ranges), the threshold level could be changed adaptively, for example by increasing it or decreasing it by N° Celsius and then repeating the region-finding process to find circular regions.

If the region that is detected moves by above a certain threshold amount, then the piece of cookware may have been moved or the region location could have been misclassified. If this is the case, then the classifier can be reset as either the hob is being attended (so no need to provide a predetermined response) or the temperature is incorrect such that the region requires reclassifying based on the new temperature.

If at least one region has been classified so as to ascribe a characteristic to that region (e.g. presence of cookware), this region may be distinguishable based on its shape. Therefore, if the cookware moves to a new location on the hob, said cookware can be identified based on searching for the previously distinguished shape of the cookware. In the case that the cookware is disposed displaced from an axis extending vertically from the centre of the hob, an appropriate transform may be applied prior or subsequent to running a cookware finding algorithm. Therefore, the shape as viewed by the at least one thermal imaging sensor of the moved cookware is compensated for.

In one option of the method for monitoring use of the cooking hob, the characteristic further comprises at least one of: (i) removal of a first piece of cookware at a first region and (ii) placement of a second piece of cookware at a second region. The first and second piece of cookware may be the same or different pieces of cookware. The first and second regions may be the same region, different regions or at least partially overlapping regions. The relevant criteria applicable to the first and second regions based on the characteristic of "removal of a first piece of cookware at a first region" and/or "placement of a second piece of cookware at a second region" may comprise any one of the relevant criteria listed in this application. If the first and/or second regions do not deviate from their relevant criteria in further processed images of the cooking hob, whereby the relevant criteria may include, for example, an acceptable change in shape (i.e. for the characteristic of "removal of a first piece of cookware at the first region", the acceptable change in shape of that region may include, for example, a change from the shape of a frying pan to the shape of a heat source (and vice versa for the characteristic of "placement of a second piece of cookware at the second region")), this may be indicative of the first and/or second regions having cookware removed and/or placed, respectively.

The relevant criteria to determine whether the first piece of cookware removed from the first region is the same as the second piece of cookware placed at the second region is any one of: (i) acceptable time elapsed between removal of the first piece of cookware at the first region and the placement of the second piece of cookware at the second region, (ii) acceptable change in temperature, (iii) acceptable change in shape and/or surface area for that region, (iv) acceptable contents of the cookware. Any deviation from the relevant criteria may indicate that the first piece of cookware and the second piece of cookware are the same cookware (i.e. the cookware has moved).

In a further optional step of the present invention, at least one distinguished region may be tracked for movement For example, if a distinguished region of the cooking hob is representative of a piece of cookware, by tracking the movement of said region across the plurality of infrared images, the movement of the cookware is also tracked. In one example, a piece of cookware is placed on one of four heat sources of a cooking hob. By processing one or more images to distinguish different regions of the hob based on temperature, the region may be subsequently classified to ascribe the characteristic of the "presence of cookware" (determined by whether the relevant criteria is met). If any of the further images processed indicate that the at least one region deviates from its relevant criteria (whereby one of the relevant criteria is "acceptable changes in position of region"), the region is "tracked" such that if the region represents cookware, movement of the cookware is detected. It is clear to see how the example of cookware can be applied to other objects and/or users such that any object detectable by the thermal imaging sensor can be tracked for movement. An acceptable change in position of the region may be representative of negligible to small deviations in cookware position based on movement caused by, for example, stirring the contents (which could result in the ascription the characteristic of unintentional movement of the cookware to that region). Therefore, a change in position beyond this acceptable change in position could result in the ascription the characteristic of intentional movement of the cookware to that region.

To improve the region finding, the image could be subsampled and interpolated to provide a higher resolution image. This is advantageous if the sensors are low resolution sensors.

Once a region indicative of the presence of cookware in the image has been detected, then the temperature for said cookware region can be estimated using a method described in GB1711491.9 e.g. the centre temperature, median temperature, mean temperature or some weighted average of the pixel temperatures in the region.

The presence and/or location of cookware can be detected by looking for square or circular regions (for square or circular cookware, respectively) of higher temperature than the surrounding pixels (whereby the surrounding pixel are representative of the surface of the hob). One way of doing this is as follows.

By taking the first spatial differential of the temperature in the x and y direction, where the x and y direction are the pixel coordinates in the thermal imaging sensor and T is the temperature as below, the gradient of the temperature can be measured.

$$\frac{\partial T}{\partial x}, \frac{\partial T}{\partial y}$$

By combining these, for example by linear summing or by taking the sum of the squares or the root of the sum of the squares, a measurement of the overall temperature gradient, T' can be found e.g.

$$T' = \sqrt{\left(\frac{\partial T}{\partial x}\right)^2 + \left(\frac{\partial T}{\partial y}\right)^2}$$

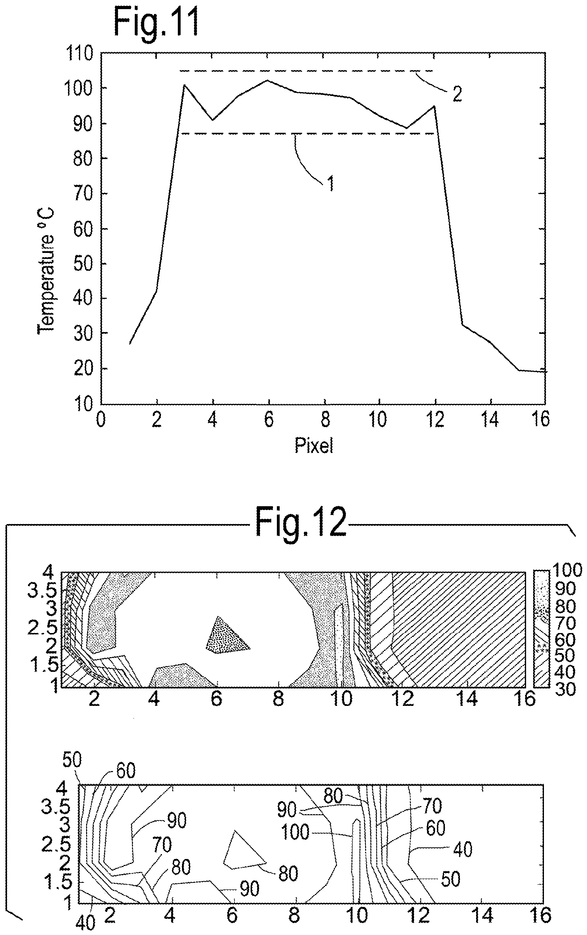

Applying a threshold to all the values of T' above a certain value (the threshold will depend upon the resolution of the sensor, the hob and cookware temperature, so could be chosen automatically e.g. the top x pixels with the highest gradient value T', where x is a number that approximately gives the circumference of a cookware in pixels as viewed from the sensor) gives a set of pixels that detect the edges of the cookware, as these will be the regions with the highest temperature gradient Fig. 11 shows a cross section of the temperature of a pan containing boiling water. As can be seen, pixels 3-4 and 12-13 have the largest gradient difference, and hence show the edge of the pan.

The thresholded pixels on the edge of the cookware could then be put through a circle finding algorithm such as the circular Hough transform which is reproduced here in pseudocode, or an alternative known in the field e.g. the RANSAC algorithm.

**Circular Hough Transform**

Where x and y are the pixel coordinates.

For each pixel(x,y)

    For each radius r = 5 to r = 10 // the possible radius in pixels

        For each theta t = 0 to 360  // the possible theta 0 to 360

            a = x − r * cos(t * PI / 180); //polar coordinate for centre

            b = y − r * sin(t * PI / 180);  //polar coordinate for centre

            A[a,b,r] +=1; //voting

        end

    end

    end

The value in the accumulator matrix, A, with the largest value would then yield the coordinates a,b of the centre of the cookware, and its radius, r.

Note that this would only work for circular cookware, a square Hough transform for square cookware could also be applied, and the accumulator with the highest value from both taken to be the one that indicates the shape of the cookware. The following example is for circular cookware (but it is clear to the person skilled in the art how this could be applied to quadrilateral or other shaped cookware):

Having found the location of the cookware in the image, the pixels located inside the cookware i.e.

$$(x - a)^2 + (y - b)^2 < r^2$$

can then be measured and taken as an indication of the temperature of the contents of the cookware on the hob.

If the temperatures at the edge of the cookware e.g. where

$$(r - d)^2 < (x - a)^2 + (y - b)^2 < r^2$$

and d is an estimate of a typical cookware wall thickness as viewed in pixels, are higher on average than those in the centre of the cookware by a significant margin, for example 10°C higher, then this is an indication that the edge of the cookware itself is warmer than the contents or that the cookware is not fully covering the heat source (e.g. the hotplate or gas flame). Fig. 12 shows the input from a sensor where this is the case. The pixels around the edge of the cookware are >100°C, where as those in the centre are around 80°C. This indicates the sensor is detecting the heat being transmitted up the metal cookware sides by the burner flames passing around the sides of the cookware. These hotter edge pixels should then be discarded, and the pixels in the centre region, R, as those where

$$(x - a)^2 + (y - b)^2 < (r - d)^2$$

taken as being measures of the top surface temperature of the cookware contents.

An alternative would be to apply a simple threshold to the temperatures in the image, and then use another circle finding algorithm such as counting all the pixels above the threshold which are less than a radius r from each possible cookware centre. The threshold can then be lowered incrementally, and when an abrupt change in the number of pixels is detected, then those counted pixels above the threshold are assumed to be part of the cookware.

Having found the region, R, containing the pixels in the cookware, these can then be used to find a representative value of the temperature of the top surface of the cookware contents, Tp. This could be done by taking a mean of the pixel temperatures within R, or a median to exclude outliers, or a weighted average to reduce the effect of pixels close to the edge of the cookware, or a single pixel in the centre of the cookware, or the maximum or minimum of any pixel or pixels within the region R.

Having detected and located the presence of the cookware and the region R over which to calculate Tp, the region R can be classified based on Tp and/or changes in Tp to ascribe a characteristic to said region, and consequently determine the attributable conditions that may occur. The determination of R may be repeated, to allow for the cookware being moved by a user as they stir or check the cooking.

A thermal imaging sensor can be mounted above the hob, for example on a wall or cooker hood. It will then have a field of view of the hob and any cookware on the hob. It will be less likely to be damaged, and will not be exposed to high direct temperatures. However, it will not be able to directly detect the temperature of the cookware bottom if the cookware has food in it, so must infer the presence of a condition based on the temperature image it sees a view from above. The thermal imaging sensor does not necessarily have a perfect overhead view of the hob. For reasons of ease of mounting, it may be placed at the back or the side of a hob and mounted, for example, on a wall, splashback or other surface behind the hob. Alternatively, or additionally, the sensor 1 may be placed vertically above the hob, e.g. in a hob hood. Placing the sensor at the back or the side of the hob gives it an angled view of the cooking area. Specifically, the at least one thermal imaging sensor can be disposed displaced from an axis extending vertically from the centre of the hob. If this is the case, then the objects in the field of view can be compensated to appear approximately orthogonal as if the sensor was projecting directly down onto them i.e. circular objects such as cookware appear circular in the image rather than elliptical. This can be performed by applying any suitable transformation e.g. a linear transformation, affine transformation or a perspective transformation.

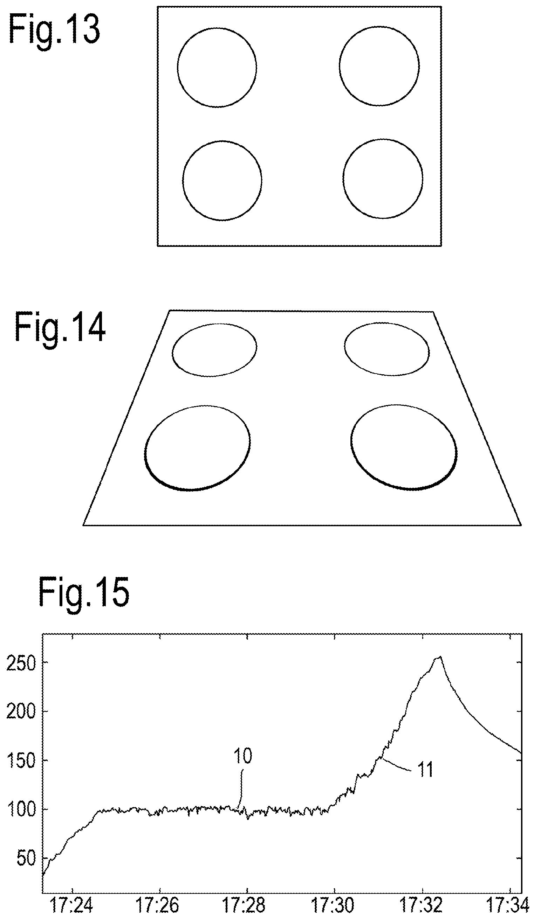

By applying the appropriate transformation, cookware, such as a pan, that is directly below the sensor will be only slightly affected (if at all), whereas cookware that is closer to the edge of the field of view will get stretched and/or compressed in at least one direction such that said cookware appears circular or closer to circular, i.e, application of the transformation on the ellipse results in the ratio of the minor and major axes of the ellipse to be closer to unity than before the transformation is applied. A circle finding algorithm can then work more reliably to locate a cookware region in the image. Alternatively, rather than transforming the image, the circle finding algorithm could be transformed such that it looks for a different shape depending on which region of the image it is looking in. Directly below the camera it looks for circular (or approximately circular) regions whereas towards the edges it looks for more elliptical shapes to allow for the different perspective angle. The same could be applied for cookware of other shapes, e.g. directly below the camera the sensor may look for square regions whereas towards the edges of its field of view it may look for a rectangle, trapezium, kite or a rhombus shape. Therefore, although the expression "circle finding algorithm" is used, it is perfectly clear to see how this may be applied to shapes other than circles such that it is a cookware finding algorithm. Fig. 13 shows an idealised orthogonal view of the hob, as if the camera was at an infinite distance. Fig. 14 shows the hob as viewed using an appropriate transform. Applying the inverse of the transform makes the images appear circular again.

Fig. 15 shows the temperature as measured by the pixel viewing the centre of the cookware as a function of time. After an initial warm up period, the duration of which will depend upon the hob heat setting and the amount of water in the cookware, the temperature, Tp, stabilises at approximately 100°C, labelled as 10, and fluctuates approximately +/-5°C due to convection currents and bubbles rising through the water, and also sensor noise.

At approximately 17:30 in the test time, the temperature of the centre of the cookware starts to rise above 100°C, due to all the water having evaporated from the cookware (the cookware has boiled dry), and continues to rise (labelled 11.). At 17:33 the temperature in the cookware has reached 250°C, atwhich point it has started to smoke, and the hob is switched off.

The relevant criteria applicable to that region from 17:30 to 17:33 are attributable to condition of "pre-ignition". The cookware has overheated and is in danger of igniting, but it hasn't yet reached ignition temperature (and is, therefore, not a fire condition). This condition can now be detected using a classifier, and a subsequent predetermined response can be provided, e.g. an alert (visual, audible and/or otherwise) can be sent to the user.

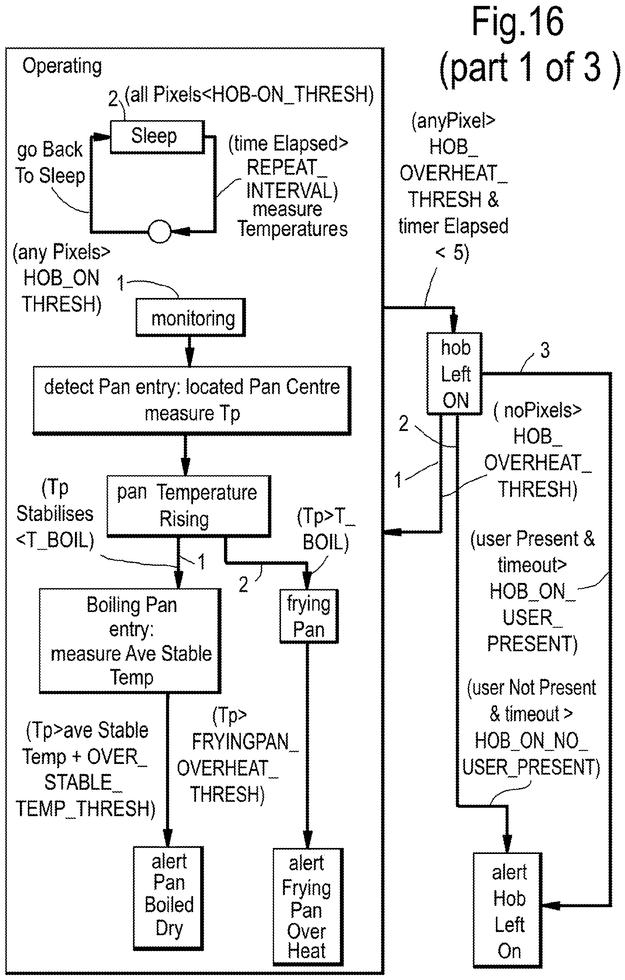

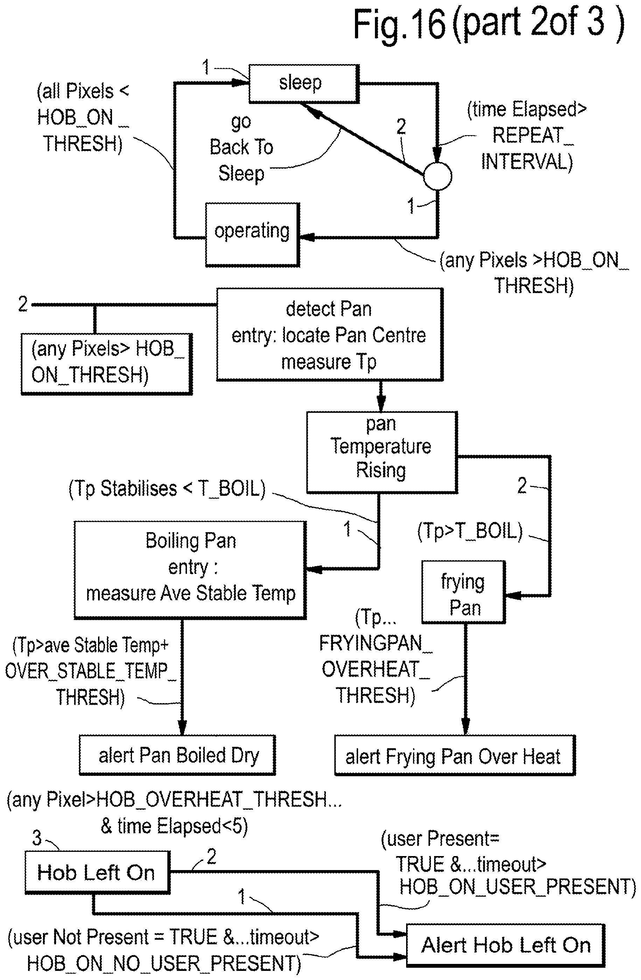

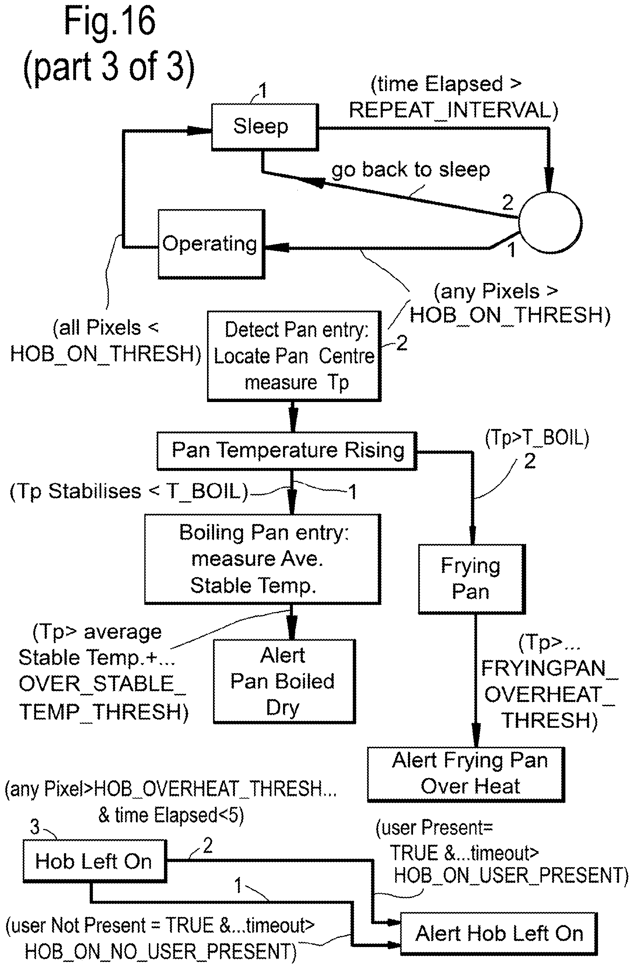

This can be achieved by an algorithm comprising some or all of the following steps. A flow diagram of the steps is shown in fig. 16.

Smooth the measured Tp by using a smoothing filter, e.g. a low pass filter or moving average, or a fit a line or curve to Tp using least squares or a similar method.

Monitor the rise rate of Tp by measuring the gradient with respect to time of either the smoothed or unsmoothed Tp using an algorithm known in the field such a differential equation, e.g.

$$\text{Rise rate} = \frac{dTp}{dt} = \frac{Tp_t - Tp_{t-1}}{h},$$

where h is the step size between samples.

If the temperature is below a temperature, e.g. 90°C +/-f, where f is a tolerance value that could be 15°C, but may be a value up to 25°C, or as low as 0°C or any value in between of 1-25C and the rise rate shows it is rising (i.e. the relevant criteria includes acceptable rates of change in temperature), then this determination of whether the relevant criteria is met allows to classify the region such that the characteristic ascribed to said region is that the cookware is in a heating up state.

Continue to measure the rise rate, and if it drops to a value below g, where g can vary between different sensors, but is around 0.2°C per second or as low as 0.002°C per second or as high as 2°C per second or any value in between, and the average temperature is 90°C +/- f°C, then the cookware contains boiling water or a water based food such as stew, soup etc.

Maintain the state that the cookware contains a water-based food and continue to measure Tp.

If Tp suddenly jumps by a threshold amount e.g. 20°C, but possibly as low as 5°C or as high as 100°C or any value in between, then the cookware has been removed from the hob. If the relevant criteria for the presence of cookware is not met, i.e. the temperature doesn't start to drop or go below a safe temperature e.g. 40°C within a set time interval, a predetermined response will be provided, e.g. an indication that the hob is left on.

If the rise rate increases above g plus a hysteresis value e.g. an additional 0.2°C per second, then the characteristic can be ascribed based on the nature of the cooking operation (cookware being boiled dry). If the temperature continues to rise above a second threshold, e.g. 120°C, but could be as low as 105°C or as high as 300°C or any value between, then a predetermined response can be provided so as to indicate that the cookware has boiled dry. The threshold may be changed based on whether a user is present based on the presence sensor, or on a sensitivity that the user can set (via a user input device), or based on whether a similar temperature has been experienced previously by the device but the indication provided by the predetermined response was cancelled, i.e. a history of user responses to the predetermined responses may be stored and further responses varied according to said history of responses.

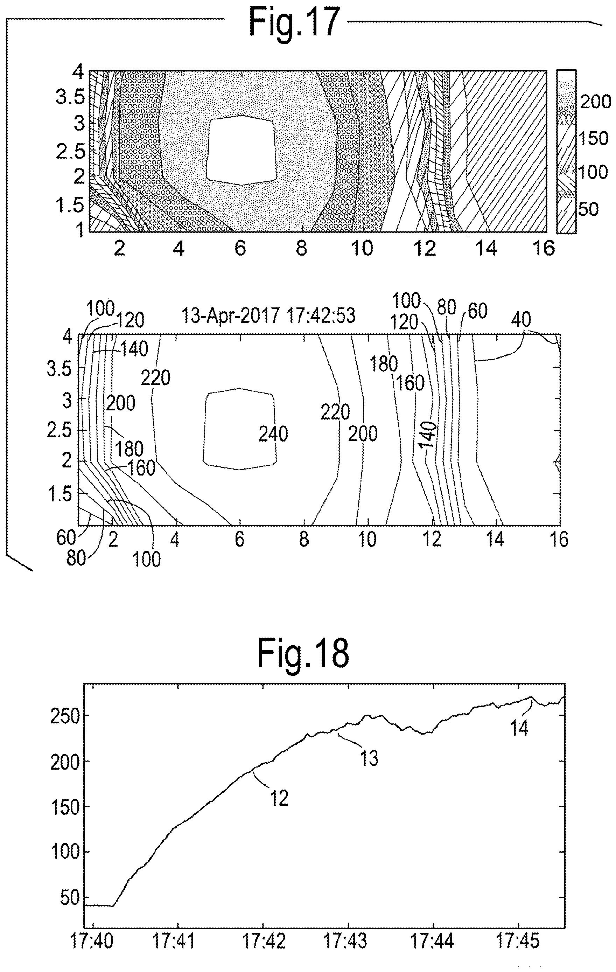

If the temperature failed to stabilise below a specified temperature, e.g. 90°C +/-f, then the cookware is characterised as either dry or containing cooking oil. Continue to monitor the temperature, but now monitor for the maximum value of Tp. If the value of Tp exceeds a smoke threshold for the likely range of oils encountered in cooking, then a predetermined response may be provided. The threshold for this value could be similar to the threshold of 315°C recommended by CPSC, or it could be lower, e.g. 180°C, to allow for temperature gradients in the oil, where the bottom is hotter than the top, or to allow for oils with lower smoke temperatures such as butter and to be alerted before the smoke appears, or it may be set higher to minimise the risk of false alarms. Fig. 17 shows the temperature image of a frying pan just after the oil started to smoke. The centre of the pan is over 240°C. The temperature of the centre of the pan during heating up is shown in Fig. 18 The gradient of heating, reaching 150°C after a predetermined time, e.g. 60 seconds, is indicative of a shallow frying pan on a reasonably high heat A deep fat frying pan would take longer to reach the desired frying temperature, typically 5 minutes or more. Monitoring the warm up time and detecting a longer warm up time, above a threshold of say 3 minutes, but as much as 10 minutes, indicates that the user is deep fat frying. This relevant criteria can be used to determine whether the condition is attributable to the risk of injury.

Note that the accuracy of the thermal imaging sensor used for the test may not be very high, so thresholds and temperatures disclosed in this patent may need to be adjusted to allow for variations in the sensor accuracy.

In some options of the step of processing one or more said images to distinguish different regions of the cooking hob based on temperature in the method for monitoring the use of a cooking hob, the explicit step of locating the cookware in the image using the circle or square detection may be skipped. At least one of the pixels in the image may be monitored for their temperature profile over time.

If a group of pixels which are close together exhibit the conditions outlined previously where they heat up, then stabilise at a temperature, e.g. < 90°C +/- f, then they are labelled as an image of cookware containing a water based food. They are then labelled as the region R as in the previous analysis and the monitoring over time of a water-based food operates as previously described.

If a group of pixels which are close together exhibit a rise rate which is below that previously measured for a hob with no cookware present, and then continue to rise above by deviating or meeting relevant criteria, e.g. a fire or pre-ignition condition, then a predetermined response may be provided.

The device to perform any of the methods of the present invention may keep a record (or provide a record to at least one memory storage device) of which locations (or regions) it has previously detected heat from to determine the location of the heat sources (hot plates). Once it has located all heat sources, e.g. hot plates, (because it has counted 4 or 5 hot plates, or it has been set with the number of hot plates by means of user input, or a sufficient amount of usage has been detected that it is confident it has seen all hob locations), it can then detect fires caused by combustible materials. If a region outside the previous known heat source location shows a temperature above a likely cooking temperature e.g. 250°C, then it can trigger a predetermined response. Alternatively, if a larger region of the image than is feasible for the most likely large cookware that consumer might use is above a likely cooking temperature threshold of say 250°C, then it can trigger an appropriate predetermined response.

If a large region of the image is above a threshold temperature e.g. 250°C, but possibly as high as 350°C or a value in between, and the temperature fluctuations above a threshold amount, e.g. +/-10°C per second or as low as +/- 1°C or as high as +/- 50°C or any value in between, then an appropriate predetermined response can be provided.

The predetermined responses for where a region deviates or meets its relevant criteria may be audible (e.g. a beep or siren noise, or a spoken alert e.g. 'warning, switch off hob' or another sound), and/or visible e.g. flashing light particularly for elderly or deaf users and/or remote e.g. a message to a smartphone or other device that would alert a user that had left the house or was in another room, or a carer who wasn't present but may be responsible for an elderly or vulnerable person.

There could also be different alert levels to the predetermined response, e.g. 'warning, pan overheating' if it is a pre-ignition condition that is likely to still be easy to tackle by a user turning off a hob or removing cookware if safe to do so, or a 'warning, fire' if the temperature has hit a likely combustion point, or heat can be detected coming from regions of the image away from the cookware or hob region R, indicating a fire has spread to other combustible materials.

The predetermined response could be sent out either directly by radio link, or by other communication means known in the field or yet to be developed e.g. Local Area Network connection or LAN such as WiFi, Zigbee, Z Wave or Bluetooth, or a Wide Area Network, such as GSM, SigFox, LoRa or other communication technology.

The alert could also go out to a central monitoring station, as could a message saying whether the condition was controlled or whether it led to a fire situation. An automated alert to the fire services could be sent based on this.

The methods of the present invention are likely to be of interest to insurance companies, and also to carers of vulnerable people, who in addition to wanting to reduce the likelihood of fires, would like to be able to measure and characterise the cooking behaviour of households to determine likely fire risk.

The information gathered could therefore comprise any of:

- Frequency of cooking.
- Frequency and/or duration of leaving cooking unattended.
- Frequency and duration of frying food.
- Time for oil pan to heat up (longer heat up period indicating deep fat frying) and frequency of occurrence of deep fat frying.
- Frequency of pre-ignition conditions.
- Response time to predetermined responses.
- Time of cooking (late night cooking may be more likely to be performed whilst tired or under the influence of alcohol, increasing fire risk).

This information could then be sent back to a monitoring system which could determine likely fire risk based on the above metrics. Optionally, or additionally, the information may form at least part of the library of relevant criteria. Optionally, or additionally, the information may form at least part of the history of cooking operations performed with cookware. Further optionally, or additionally, the information may form part of a history of event of cooking hob operations.

The characteristic of that region (e.g. presence of cookware, presence of heat source, position of cookware) may be classified by monitoring and/or measuring the temperature of the at least one region over time.

Classifying the characteristic ascribed to that region can be done by a process comprising the following steps: A first step may be to fit a line or a curve to the temperature as a function of time using a known technique, e.g. least squares or linear regression.

A second step may be measuring the value(s) of the temperature, temperature gradient or other coefficient (where the other coefficient could be a polynomial coefficient, exponential coefficient or any other coefficient of the line or curve fit) from the curve or line fit to reduce noise from the sensor and/or fluctuations in the measured temperature.

An alternative to the second step may be done by smoothing the temperature as a function of time using a smoothing filter such as a low pass filter or moving average and then measuring the absolute temperature and/or temperature gradient, or using the fitting technique described above.

A third step may be checking the goodness of fit of the line or curve fit using a known technique, e.g. R-squared, Chi-squared or maximum residual.

A further step may be classifying the piece of cookware as heating, steady state or cooling based on the coefficients.

If necessary, a further step may be changing the cookware classification above based on whether the coefficients have changed, or the goodness of fit has changed above a certain threshold.

Another step may be determining the cooking state from the coefficients.

Another step may be applying a predetermined response rule to each cooking type. Therefore, for some types of cooking, e.g. frying an egg, where user preferences vary, the predetermined response rule may differ so as to allow different relevant criteria, e.g. the "acceptable range of temperatures" vary depending on the cooking type.

Optionally, or additionally, a further step is that the predetermined responses vary according to whether a user is detected, and/or the predetermined responses can be varied by user input. In some options of the present invention, a history of user responses to the predetermined responses is stored. Subsequent predetermined responses may be varied in accordance to this history of user responses to the predetermined responses. For example, if a user ignores a pre-ignition condition on a consistent basis (because they may prefer to cook their foodstuff until it burns), the user can either vary the predetermined response themselves, and/or the predetermined responses will vary according to the history of user responses to the predetermined responses. Further optionally, or additionally, the extent of the predetermined responses may differ depending upon nature of the deviation from the relevant criteria. E.g. if the relevant criteria applicable to a region comprises an acceptable temperature range of 250°C and 300°C, and the region deviates from this in that it is measured as 305°C, this may sound a quieter audible noise than if the region is measured as 400°C.

A way of determining the cooking state and alerting may be carried out as in the following example of operation (the values are purely exemplary and may be replaced with any reasonable values without departing from the principle of the invention):

A first step may be to measure the temperature of the cookware as a function of time so as to know the temperature gradient using the technique described above.

If the temperature gradient is positive, above a predetermined value, e.g. 0.04°C/second, and has been above that value for predetermined amount of time, e.g. 10 seconds, then the cookware is in a heating state. If the temperature gradient is substantially higher, then there is likely no cookware on the hob. The upper threshold could be preset to any value, e.g. 0.5°C/second or up to 300°C/second. The threshold value could be based on knowledge of the hob type (gas, electric, type of electric) or a predetermined fixed value.

If the temperature gradient reduces to below a predetermined value, e.g. below 0.04°C/sec, and the temperature is between a predetermined boiling minimum, for example 55°C (to allow for a lid of the cookware which will appear colder than the boiling water underneath the lid, or a thick stew or sauce or other foodstuff, which if unstirred will have a temperature gradient across it so the surface will appear colder than the food at the bottom of the cookware) to a predetermined boiling maximum, for example 95°C or 100-115°C (to allow for a higher boiling temperature due to a sugar or salt solution or other food which affects the boiling point, and it stays within a margin, e.g. +/-5°C, for a predefined period of time, e.g.10 seconds but could be up 5 minutes or 10 minutes), then the pan is boiling.

Once the cookware is classified as boiling, and after a predetermined amount of time that the gradient increases to a predetermined boiling gradient value, e.g. 0.1°C/second, and the measured cookware temperature exceeds its previous stable temperature within the margin (e.g. +/-5°C) by a predetermined threshold amount, e.g. 10°C, then the cookware has likely boiled dry. Further heating without attention from the user is likely to result in a fire in the food, so an alert is set for a pre-ignition risk.

If the cookware is heating, but the temperature gradient does not settle below a predetermined value, e.g. 0.04°C, and the temperature continues to rise above predetermined boiling maximum value, then the pan is likely to either be dry or have oil in it for frying.

If the temperature continues to rise, and exceeds an overheat threshold for a dry or frying pan, then an alert is set for a frying pan overheat. The overheat threshold could be set quite low, e.g. 150°C, so that it will alert before butter reaches its smoke temperature, or the overheat threshold could be set higher such that it does not alert until other typical cooking oils such as rapeseed or sunflower are close to their smoke temperature, e.g. 190°C, or it could be set at a higher temperature such that it doesn't alert until a value above the smoke temperature but below the auto-ignition temperature for typical oils e.g. above 240-250°C (smoke temperature) and below 300-450°C (auto-ignition temperature).

The overheat threshold could be predetermined, or it could be set by the user via a user interface of the hob or the sensor, or it could be automatically learnt based on previous temperature measurements. If the user regularly permits the pan to reach a higher temperature, e.g. in the case that they are using a cooking oil with a higher smoke temperature, or they cook meat or stir-fries or other foods that are intentionally seared at high temperatures, then the threshold is set to a higher value such that it does not provide an indication/alert unnecessarily.

This could be as follows:

If temperature exceeds a threshold value and the device continues to observe "normal" cooking for a predetermined amount of time, e.g. the next few minutes, this is indicative that a fire did not occur. If this occurs N times or more, where N is at least 1, then the threshold value may be increased by an amount, or the threshold value may be increased to the maximum observed temperature during the event, or the threshold value may be increased to the maximum observed temperature plus an offset.

Another potential risk is that there is a fire caused by the presence of objects other than cookware, e.g. a combustible item, on or near the hob.

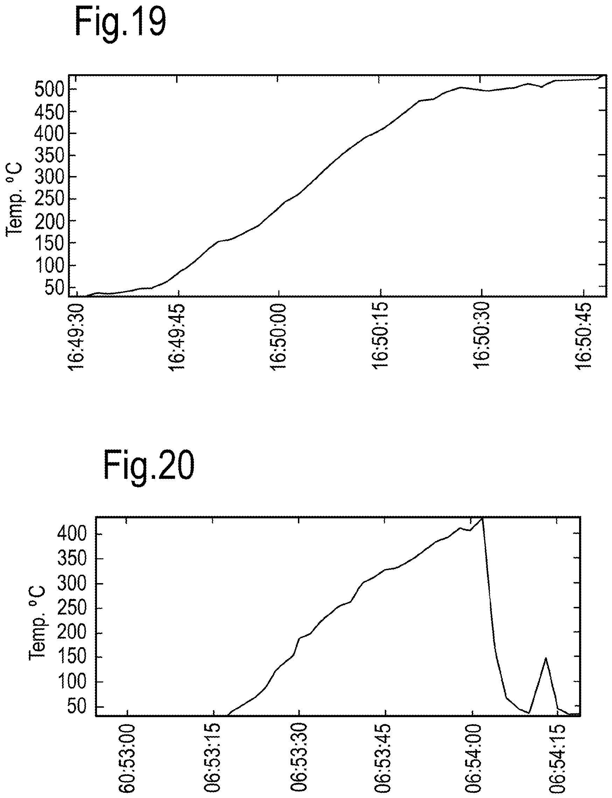

Fig. 19 shows the temperature profile of a piece of cardboard on fire on a hob as a function of time.

Fig. 20 shows the temperature profile of a tea towel on fire on a hob as a function of time.

An alternative method of classifying a fire on the hob may be by measuring the temperature, temperature gradient and/or temperature curvature by methods described above and detecting at least one of the following scenarios:

a) A rise in temperature of a region of the image by a predetermined amount, e.g. 5°C/second or higher.

b) A rise to beyond a temperature normally seen, e.g. to a temperature value of over 300°C-500°C.

c) An increase in the size/area of the region above a defined temperature threshold.

d) A repeated fluctuation in the temperature of individual regions or pixel(s) of more than a predetermined amount, e.g. +/-5°C, from a smooth curve fitted to the temperature, or some other measure of deviation from a smooth curve, e.g.

the variance or the standard deviation.

If a defined combination b) plus a combination of a), c) or d) is detected then a fire condition can be triggered. By requiring d) we can distinguish between combustion.

Alternatively the step of classifying in the method for monitoring use of a cooking hob could be performed by a machine learning algorithm known in the field e.g. a Neural Network or a Support Vector Machine or other statistical classifier e.g. a regression algorithm. By taking a series of sequential images (with either the thermal imaging sensor or a conventional digital visible light camera) and labelling each of the image as either normal or alert states, a machine learning algorithm could replicate the above classification without the explicit calculation steps, i.e. without necessitating temperature measurements. The algorithm could be trained and classified using the images directly, or by features that have been extracted in a pre-filtering stage such as finding the hot regions in the image and their temperatures and using those as input.

In a further option of the method described above, the method further comprises step(s) to enable it be used as a cooking assistant. Hereby, the information concerning type of cooking process and/or nature of foodstuff being cooked is used to direct user operation of the cooking hob.

Measurement of the temperature of the pan can enable the device to assist a cook.

If a cook is preparing for cooking, e.g. a steak, the device can monitor the temperature of the heating pan and indicate as such to the cook audibly, visually, haptically and/or remotely through an app when the temperature of the pan is suitable to add the food.

Alternatively, or additionally, an output either visually on a display, audibly via a loudspeaker and/or via a remotely connected interface could indicate to the user the pan temperature or/and state e.g. 'The pan is at 180°C' and/or 'The pan is at the correct temperature to poach an egg'.

The cooking advice required could be preset, or it could be requested through an interface which could be direct or it could be through another interface, for example a connected home system or assistant, or through a personal electronic device (e.g. smartphone or tablet) or computer or other connected device (e.g. a virtual assistant or a chatbot) that provides an interface. The processing could take place on the device, or it could be part of a remote system, or it could be a combination of the two. The indications back to the user can also be direct, or they can be via another interface such as a connected home device, remote interface, phone, tablet or similar device.

Also the device may automatically monitor for when food is cooked.

The following is an example of how the cooking assistant can be employed for the specific example of cooking a steak:

The device monitors the heating pan. When a desired temperature is reached in the pan, e.g. 200°C, it informs the user, so the user knows the pan is at a suitable temperature to add the food to avoid overheating (and potentially burning), or being too cold and failing to sear the food.

The device can then monitor a combination of the temperature of the pan, the type of food, the time that it has been cooking and/or the temperature of the food within the pan to inform the user when the food is cooked to the desired degree and is either ready to serve, or should be turned over, or should be stirred.

It can also estimate whether the food is safely cooked, for example, the temperature in the middle of a piece of meat should exceed a safe temperature e.g. 65°C, or higher, to minimise the risk of food poisoning.

By measuring the pan temperature, and combined with the time at the temperature the rate of heat flow through the food can be estimated. This can then be used to estimate the internal temperature to indicate whether the food has reached the desired temperature throughout. The estimate may also be a function of the observed temperature of the top surface of the food. It may also be combined with knowledge of the food type (and hence its thermal conductivity) and possibly also the thickness of the food, which may be inputted to the device via an interface or estimated.

The inner temperature, $T_{internal}$, can therefore be estimated from:

$T_{internal}$ = f(time, Pan temperature, Initial food temperature, observed food temperature on the external surface, thickness of food, conductivity of food)

The form of the function f can be a lookup function, or a function such as a surface fit based on a fit to observed data, or a function derived from the heat flow equations through the food, or a statistical classifier or machine learning algorithm.

When the temperature has reached a desired setpoint it can then inform the user by providing a predetermined response.

The device can also indicate when foodstuffs are cooked, for example if it knows that a user is cooking pasta, it can start a timer either input by the user via a user input device, and/or by the pasta being added to the pan as indicated by a drop in temperature in a boiling pan. After a defined time e.g. 12 mins, the device can alert the user that the food is cooked by providing a predetermined response.

It may also indicate when foods that are intended to absorb water are cooked such as rice. For example when the rate of steam formation in a pan drops when it has no water left, the temperature may rise after a period of being steady, which is an indication the food is cooked. Alternatively depending on the conductivity of the food, the temperature may drop after a steady period, as there is now no longer any water to conduct the heat up through to the top surface of the food and the food cools on the top surface where it is in contact with the air.

Alternatively, or additionally, it may monitor a presence sensor e.g. a PIR or the at least one thermal imaging sensor (which can act as a presence sensor) and only go into full power mode when motion near the hob is detected.

The present application discloses a system for monitoring the use of a cooking hob, and the system comprises at least one thermal imaging camera, at least one data processor configured to perform any of the methods in this application, and at least one memory storage device. The at least one data processor is communicatively coupled to at least one of the at least one memory storage device or the at least one thermal imaging sensor. Optionally, the at least one storage device comprises a library of relevant criteria and/or at least one of the images taken by the at least one thermal imaging sensor.

The system may further comprise a display device configured for providing visible indicators of condition of the cooking hob and/or regions of the cooking hob. The display device may be at least one of an Light emitted diode display, a liquid crystal display, a quantum dot display. The display device may form part of a device mounted on or near the hob. Additionally, or alternatively, the display device may form part of a communication device, e.g. a smart phone, tablet, head-mounted device or a virtual assistant. Additionally, or alternatively, the system may comprise an audible output device to provide audible indicators of condition of the cooking hob response to output from the data processing device. The audible output device may be a loudspeaker. The audible output device may form part of a device mounted on or near the hob. Alternatively, the display device may form part of a communication device, e.g. a smart phone, tablet or a virtual assistant Further optionally, the system may comprise a user input device. The user input device may comprise at least one of the following: a keyboard, a touchpad, a motion sensing input device, a microphone, keyer, a thermal imaging sensor or a camera. A user may input information via the thermal imaging sensor by hand gestures in its field of view. Some of the user input devices may form part of a communication device, e.g. the keyboard may be the keyboard of a tablet, the microphone may be the microphone of a virtual assistant, e.g. Alexa, etc. In some options, the display device is the user input device via a touchscreen.

In some options of the system, the system may further comprise a flame detector. A flame detector is a sensor designed to detect the presence of a flame or fire so as to allow flame detections. If a flame or fire is detected, the relevant criteria for conditions attributable for a fire will be met so as to trigger an appropriate predetermined response. Alternatively, or additionally, the flame detector may comprise its own response device whereby the response device, in response to detection of a flame, may sound an alarm, deactivate a fuel line, cut power to the heat source, and/or activate a fire suppression system. In some options of the system, one or some of the at least one thermal imaging sensors is a flame detector. In some options, the flame detector may enable the identification between different states/types of flames, e.g. identification between gas combustion from a cooking hob and a dangerous fire. The identification between the difference states/types of flame may be carried out using Fourier analysis or any other spectral analysis. Combustion of different fuels produces different fluctuation/flicker rates of a flame (usually between 1 and 20 Hz), e.g. the flicker rate of gas combustion will differ from the flicker rate of an oil fire set alight by reaching a temperature higher than its combustion temperature. This flicker is a periodic variation of intensity or amplitude of the radiation (e.g. infrared, visible and/or ultraviolet) produced by the burning of the fuel sustaining the flame. A discrete Fourier transform (a variation of a fast-Fourier transform) is useful in order to sense the presence of frequencies in a neighbourhood of a particular single frequency. The process to detect a flame may use a discrete Fourier transform to sense the presence of a component of the flicker rate in the flame. Thresholds in the form of high and/or low pass filters applied to the frequency domain representation of the original signal produced by the flame detector may be employed so as to allow detection of different types of flames by their flicker rates. The detection of flickering by any of the flame detection methods described above may be used in other applications such as home appliances where detection of a flame is required, for example in detection of flames on or in buildings or vehicles, and the applicant reserves the right to prosecute detection in this manner in a separate application.

The system may be comprised partially, or wholly, by a head-mounted device for virtual or augmented reality. The head-mounted display device displays the plurality of infra-red images to the user, and may overlay information onto the images, e.g. the temperature, condition, type of foodstuffs, time-remaining to complete cooking etc. The head-mounted display device may also be a user input device whereby the user input is hand gesturing as viewed by the thermal imaging camera. In one option of the present invention, at least one of the at least one thermal imaging sensor, at least one data processor configured to perform any of the methods disclosed, and/or the at least one memory storage device is comprised by the head-mounted display device. The head-mounted display device may comprise positional tracking so as to detect the precise position of said device. The positional tracking registers the position by recognising the rotation of the device (that is the pitch, yaw and/or roll), and/or by the recording of the translational movement of the device. The positional tracking may be a wireless tracking using a set of anchors that are placed around the perimeter of the tracking space and the tracked tag(s) (comprised by the device). The tag(s) triangulate their 3D position using the anchors placed around the perimeter. In an alternative option, another positional tracking technique known in the field may be employed, e.g. optical tracking, inertial tracking, acoustic tracking or magnetic tracking. The head-mounted display device may comprise at least one digital camera.

In order for the hob to be controlled in the method described above, the data processor may be in communication with the cooking hob and/or the gas/power supply to the cooking hob. Therefore, the data processor can control the heating source(s) of the cooking hob.

The system may also be configured to transmit information or data to one or more specified communication devices and/or to a remote location. For example, the thermal imaging sensor may transmit image data to a user's smartphone, and the smartphone's data processor may perform any of the methods disclosed in this application so as to monitor the use of a cooking hob.

The present invention may further comprise a computer program comprising instructions which, when the program is executed by a data processor, cause the data processor to carry out the steps of the method of any of the methods disclosed.

Any of the method steps of the present invention may be performed by a data processor which is configured to receive and/or access a plurality of infrared images.

The claimed methods, systems, sensors, devices, and computer programs thus provide not only means to monitor cooking hobs to look for potentially hazardous conditions [e.g. pre-ignition conditions; fire; other potential for injury, for example proximity of user relative to heat sources and/or relative to cooking hob surface above a threshold temperature] but also provide means to act as a cooking assistant, indicating to the user conditions that require attention [e.g. foodstuff reaching its maximum time at temperature], or indeed directing the user when action is required.

The above disclosure is not limiting to the scope of the disclosure as set out in the appended claims.

**Claims**

1. A computer-implemented method for monitoring the use of a cooking hob, the method comprising

    a. accessing a plurality of infrared images of the cooking hob
    b. processing one or more said images to distinguish different regions of the cooking hob;
    c. classifying at least one of said regions based on temperature to ascribe a characteristic to that region, wherein classifying based on temperature includes classifying based on changes in temperature;
    d. determining relevant criteria applicable to that region depending upon characteristic;
    e. processing further of said images to determine whether that region is deviating from its relevant criteria
    f. providing one or more predetermined responses where that region deviates from its relevant criteria
    and wherein ascribing a characteristic that region further comprises determining the nature of a cooking operation being performed with cookware, and ascribing a characteristic based on the nature of cooking operation.

2. A method as claimed in Claim 1, further comprising the step of providing one or more predetermined responses where that region meets it relevant criteria.

3. A method as claimed in any preceding Claim, wherein the characteristic includes one or more of

    i. presence of cookware
    ii. presence of a lid on cookware
    iii. nature of material of cookware and/or cookware lid
    iv. position of cookware
    v. presence of a heat source
    vi. position of cookware relative to a heat source
    vii. presence of cooking hob surface below a threshold temperature
    viii. rate of change of temperature of cooking hob surface below a threshold temperature
    ix. presence of cooking hob surface above a threshold temperature
    x. presence of a user
    xi. position of a user relative to heat sources and/or relative to cooking hob surface above a threshold temperature
    xii. presence of vapour/fumes from cooking
    xiii. presence of objects other than cookware
    xiv. type of cooking hob
    xv. removal of a first piece of cookware at a first region
    xvi. placement of a second piece of cookware at a second region
    xvii. intentional movement of cookware
    xviii. unintentional movement of cookware.

4. A method as claimed in any preceding Claim, further comprising storing a history of cooking operations performed with the cookware, and ascribing a characteristic based on the history of cooking operations.

5. A method as claimed in any preceding Claim, wherein the nature of cooking operation is determined by one or more of:-

- use of a classifier to infer nature of cooking operation by temperature of that region, and/or changes in temperature of that region, and/or changes in temperature within that region and/or differences in temperature within that region
- user input information concerning type of cooking process and/or nature of foodstuff being cooked.

6. A method as claimed in Claim 5, in which information concerning type of cooking process and/or nature of foodstuff being cooked is used to direct user operation of the cooking hob.

7. A method as claimed in any preceding Claim, in which the relevant criteria include conditions attributable to any of

I. Normal operation
II. Completion of cooking
III. Pre-ignition conditions
IV. Risk of injury
V. Fire

8. A method as claimed in Claim 7, in which the relevant criteria include one or more of:-

VI. acceptable overall temperatures for that region
VII. acceptable differences in temperature within that region
VIII. acceptable rates of change of temperature
IX. acceptable overall fluctuations in temperature for that region
X. acceptable fluctuations in temperature within that region
XI. acceptable time exposed to a predetermined temperature or predetermined range of temperatures
XII. changes in shape of that region
XIII. criteria based on temperature history of that region
XIV. criteria based on type of heat source present in the hob
XV. criteria based on user presence
XVI. criteria provided as relevant to cooking a selected foodstuff
XVII. acceptable time elapsed between removal of the first piece of cookware at the first region and the placement of the second piece of cookware at the second region
XVIII. acceptable change in shape for that region
XIX. acceptable contents of the cookware
XX. acceptable change in position of the cookware.

9. A method as claimed in any preceding Claim, in which the predetermined responses include one or more of:-

- provision of visible indicators of condition of that region
- provision of audible indicators of condition of that region
- provision of haptic indicators of condition of that region
- transmission of information concerning that region to one or more specified communication devices
- transmission of information concerning that region to a remote location
- controlling heat generated by a heating source in the cooking hob
- disabling the cooking hob
- activating fire prevention and/or suppression measures,

10. A method as claimed in any preceding Claim, in which:

the predetermined responses vary according to whether the presence of a user is detected; and/or
the predetermined responses can be varied by user input; and/or
in which a history of user responses to the predetermined responses is stored and further responses varied according to said history of responses.

11. A method as claimed in any preceding Claim, wherein the plurality of infrared images are accessed from one or more thermal imaging sensors disposed to take images of the cooking hob and information indicative of the condition of at least one of the regions is visually displayed on a screen.

12. A system for monitoring the use of a cooking hob, comprising:

a) at least one thermal imaging sensor,
b) at least one data processor configured to perform the method of any of the preceding claims and
c) at least one memory storage device.

13. A system as claimed in Claim 12, further comprising one or more of:-

a display screen configured for providing visible indicators of condition of the cooking hob and/or of regions of the cooking hob
an audible output device to provide audible indicators of condition of the cooking hob responsive to output from the data processing device
a user input device.

14. A system as claimed in any of Claims 12 to 13, wherein the data processor is in communication with the cooking hob and can control heating sources in the cooking hob.

15. A system as claimed in any of Claims 12 to 14, configured to transmit data to one or more specified communication devices and/or to a remote location.

**Patentansprüche**

1. Computerimplementiertes Verfahren zur Überwachung der Benutzung eines Kochfelds, wobei das Verfahren

a. Zugriff auf eine Vielzahl von Infrarotbildern des Kochfelds
b. Verarbeiten eines oder mehrerer der Bilder zur Unterscheidung verschiedener Bereiche des Kochfelds;
c. Klassifizierung mindestens einer der Regionen auf der Grundlage der Temperatur, um dieser Region eine Eigenschaft zuzuschreiben, wobei die Klassifizierung auf der Grundlage der Temperatur die Klassifizierung auf der Grundlage von Temperaturänderungen umfasst;
d. Festlegung einschlägiger Kriterien, die für diese Region in Abhängigkeit von den Merkmalen gelten;
e. weitere Verarbeitung dieser Bilder, um festzustellen, ob diese Region von ihren relevanten Kriterien abweicht
f. Abgabe einer oder mehrerer im Voraus festgelegter Antworten, wenn diese Region von ihren einschlägigen Kriterien abweicht,

und wobei das Zuordnen eines Merkmals dieses Bereichs weiterhin das Bestimmen der Art eines Kochvorgangs, der mit Kochgeschirr ausgeführt wird, und das Zuordnen eines Merkmals, das auf der Art des Kochvorgangs basiert, umfasst.

2. Verfahren nach Anspruch 1, das ferner den Schritt des Bereitstellens einer oder mehrerer vorgegebener Reaktionen umfasst, wenn dieser Bereich die relevanten Kriterien erfüllt.

3. Verfahren nach einem der vorhergehenden Ansprüche, wobei das Merkmal eines oder mehrere der

i. Vorhandensein von Kochgeschirr
ii. Vorhandensein eines Deckels auf dem Kochgeschirr
iii. Beschaffenheit des Materials des Kochgeschirrs und/oder des Kochgeschirrdeckels
iv. Position des Kochgeschirrs
v. Vorhandensein einer Wärmequelle
vi. Position des Kochgeschirrs relativ zu einer Wärmequelle
vii. Vorhandensein einer Kochfeldoberfläche unterhalb einer Schwellentemperatur
viii. Geschwindigkeit der Änderung der Temperatur der Kochfeldoberfläche unter die Schwellentemperatur
ix. Vorhandensein einer Kochfeldoberfläche oberhalb einer Schwellentemperatur
x. Anwesenheit eines Benutzers

xi. Position des Benutzers relativ zu Wärmequellen und/oder relativ zur Oberfläche des Kochfelds über einer Schwellentemperatur
xii. Vorhandensein von Dämpfen/Dämpfen beim Kochen
xiii. Vorhandensein von anderen Gegenständen als Kochgeschirr
xiv. Art des Kochfelds
xv. Entnahme des ersten Kochgeschirrs an einem ersten Bereich
xvi. Platzierung eines zweiten Kochgeschirrs an einer zweiten Stelle
xvii. absichtliches Bewegen von Kochgeschirr
xviii. unbeabsichtigte Bewegung des Kochgeschirrs.

4. Verfahren nach einem der vorhergehenden Ansprüche, das ferner das Speichern einer Historie von Kochvorgängen, die mit dem Kochgeschirr ausgeführt wurden, und das Zuordnen einer Eigenschaft, die auf der Historie der Kochvorgänge beruht

5. Verfahren nach einem der vorhergehenden Ansprüche, wobei die Art des Kochvorgangs durch einen oder mehrere der folgenden Faktoren bestimmt wird:

• Verwendung eines Klassifikators zur Ableitung der Art des Garvorgangs anhand der Temperatur dieses Bereichs und/oder von Temperaturänderungen in diesem Bereich und/oder von Temperaturänderungen innerhalb dieses Bereichs und/oder von Temperaturunterschieden innerhalb dieses Bereichs
• vom Benutzer eingegebene Informationen über die Art des Garvorgangs und/oder die Art des zu kochenden Lebensmittels.

6. Verfahren nach Anspruch 5 oder 6, bei dem Informationen über die Art des Garvorgangs und/oder die Art des zu garenden Lebensmittels verwendet werden, um die Bedienung des Kochfelds durch den Benutzer zu steuern.

7. Verfahren nach einem der vorhergehenden Ansprüche, bei dem das System Bedingungen erkennt, die einem der

I. Normaler Betrieb
II. Abschluss des Garvorgangs
III. Bedingungen vor der Zündung
IV. Verletzungsgefahr
V. Feuer

8. Verfahren nach Anspruch 7, bei dem die relevanten Kriterien eines oder mehrere der folgenden Kriterien umfassen:

VI. akzeptable Gesamttemperaturen für diese Region
VII. akzeptable Temperaturunterschiede innerhalb dieser Region
VIII. akzeptable Änderungsraten der Temperatur
IX. akzeptable Gesamttemperaturschwankungen für diese Region
X. akzeptable Temperaturschwankungen innerhalb dieser Region
XI. akzeptable Zeit, die einer vorgegebenen Temperatur oder einem vorgegebenen Temperaturbereich ausgesetzt ist
XII. Veränderungen in der Form dieses Bereichs
XIII. Kriterien, die auf dem Temperaturverlauf dieser Region basieren
XIV. Kriterien basierend auf der Art der im Kochfeld vorhandenen Wärmequelle
XV. Kriterien basierend auf der Benutzerpräsenz
XVI. Kriterien, die für das Kochen eines ausgewählten Lebensmittels relevant sind
XVII. Akzeptable Zeit, die zwischen der Entnahme des ersten Kochgeschirrs im ersten Bereich und dem Platzieren des zweiten Kochgeschirrs im zweiten Bereich verstrichen ist
XVIII. akzeptable Formänderung für diesen Bereich
XIX. akzeptabler Inhalt des Kochgeschirrs
XX. akzeptable Änderung der Position des Kochgeschirrs.

9. Verfahren nach einem der vorhergehenden Ansprüche, bei dem die vorgegebenen Reaktionen eine oder mehrere der folgenden Wirkungen umfassen:

• Bereitstellung sichtbarer Indikatoren für den Zustand dieser Region

• Bereitstellung von akustischen Indikatoren für den Zustand dieser Region
• Bereitstellung von haptischen Indikatoren für den Zustand dieser Region
• Übertragung von Informationen über diese Region an ein oder mehrere bestimmte Kommunikationsgeräte
• Übermittlung von Informationen über diese Region an einen abgelegenen Ort
• Steuerung der von einer Heizquelle im Kochfeld erzeugten Wärme
• Deaktivieren des Kochfelds
• Aktivierung von Brandverhütungs- und/oder -bekämpfungsmaßnahmen,

10. Verfahren nach einem vorhergehenden Anspruch, bei dem

Die vorgegebenen Antworten variieren je nachdem, ob die Anwesenheit eines Benutzers erkannt wird, und/oder
Die vorgegebenen Antworten können durch Benutzereingaben variiert werden. und/oder
in dem eine Historie von Benutzerantworten auf die vorgegebenen Antworten gespeichert wird und weitere Antworten entsprechend dieser Antworthistorie variiert werden.

11. Verfahren nach einem der vorhergehenden Ansprüche, wobei auf die Mehrzahl von Infrarotbildern von einem oder mehreren Wärmebildsensoren zugegriffen wird, die dazu eingerichtet sind, Bilder des Kochfelds aufzunehmen, und Informationen, die auf den Zustand mindestens eines der Bereiche hinweisen, visuell auf einem Bildschirm angezeigt werden.

12. System zur Überwachung der Benutzung eines Kochfelds, bestehend aus:

a) mindestens einen Wärmebildsensor,
b) mindestens einen Datenprozessor, der konfiguriert ist, das Verfahren eines der vorhergehenden Ansprüche auszuführen, und
c) Mindestens ein Speichergerät

13. System nach Anspruch 12, ferner umfassend eines oder mehrere:

einen Bildschirm, der so konfiguriert ist, dass er sichtbare Indikatoren für den Zustand des Kochfelds und/oder der Bereiche des Kochfelds anzeigt
Ein akustisches Ausgabegerät, das akustische Anzeigen des Zustands des Kochfelds liefert, das auf die Ausgabe des Datenverarbeitungsgeräts reagiert
ein Benutzereingabegerät.

14. System nach einem der Ansprüche 12 bis 13, wobei der Datenprozessor mit dem Kochfeld in Verbindung steht und Heizquellen im Kochfeld steuern kann.

15. System nach einem der Ansprüche 12 bis 14, konfiguriert für die Übertragung von Daten zu einer oder mehreren spezifizierten Kommunikationsvorrichtungen und/oder zu einem entfernten Standort


**Revendications**

1. Procédé mis en oeuvre par ordinateur pour surveiller l'utilisation d'une table de cuisson, le procédé comprenant

a. Accès à une pluralité d'images infrarouges de la table de cuisson
b. traitement d'une ou plusieurs de ces images pour distinguer différentes régions de la plaque de cuisson ;
c. la classification d'au moins l'une desdites régions en fonction de la température pour attribuer une caractéristique à cette région, dans laquelle la classification en fonction de la température comprend la classification en fonction des changements de température ;
d. déterminer les critères pertinents applicables à cette région en fonction de la caractéristique ;
e. le traitement ultérieur desdites images afin de déterminer si cette région s'écarte de ses critères pertinents
f. fournir une ou plusieurs réponses prédéterminées lorsque cette région s'écarte de ses critères pertinents,

et dans lequel l'attribution d'une caractéristique à cette région comprend en outre la détermination de la nature d'une opération de cuisson effectuée avec un ustensile de cuisine, et l'attribution d'une caractéristique basée sur la nature de l'opération de cuisson.

**2.** Procédé selon la revendication 1, comprenant en outre l'étape consistant à fournir une ou plusieurs réponses prédéterminées lorsque cette région répond à ses critères pertinents.

**3.** Procédé selon l'une quelconque des revendications précédentes, dans lequel la caractéristique comprend un ou plusieurs des

      i. Présence d'ustensiles de cuisine
      ii. Présence d'un couvercle sur les ustensiles de cuisine
      iii. Nature du matériau de l'ustensile de cuisine et/ou du couvercle de l'ustensile de cuisine
      iv. Position de l'ustensile de cuisine
      v. présence d'une source de chaleur
      vi. position de l'ustensile de cuisine par rapport à une source de chaleur
      vii. présence d'une surface de cuisson inférieure à une température seuil
      viii. Taux de changement de température de la surface de la table de cuisson en dessous d'une température seuil
      ix. présence d'une surface de cuisson supérieure à une température seuil
      x. Présence d'un utilisateur
      xi. Position de l'utilisateur par rapport aux sources de chaleur et/ou par rapport à la surface de la table de cuisson au-dessus d'une température seuil
      xii. présence de vapeurs/fumées de cuisson
      xiii. Présence d'objets autres que des ustensiles de cuisine
      xiv. Type de plaque de cuisson
      xv. Retrait d'un premier ustensile de cuisine dans une première région
      xvi. Placement d'un deuxième ustensile de cuisine dans une deuxième région
      xvii. mouvement intentionnel des ustensiles de cuisine
      xviii. mouvement involontaire des ustensiles de cuisine.

**4.** Procédé selon l'une quelconque des revendications précédentes, comprenant en outre l'enregistrement d'un historique des opérations de cuisson effectuées avec l'ustensile de cuisine et l'attribution d'une caractéristique basée sur l'historique des opérations de cuisson.

**5.** Procédé selon l'une quelconque des revendications précédentes, dans lequel la nature de l'opération de cuisson est déterminée par un ou plusieurs des éléments suivants :

      • l'utilisation d'un classificateur pour déduire la nature du fonctionnement de la cuisson en fonction de la température de cette région et/ou des changements de température de cette région, et/ou des changements de température dans cette région et/ou des différences de température dans cette région
      • Informations saisies par l'utilisateur concernant le type de processus de cuisson et/ou la nature des aliments cuits.

**6.** Procédé selon la revendication 5 ou 6, dans lequel des informations concernant le type de procédé de cuisson et/ou la nature de la denrée alimentaire cuite sont utilisées pour diriger le fonctionnement de la table de cuisson par l'utilisateur.

**7.** Procédé selon l'une quelconque des revendications précédentes, dans lequel le système détecte des conditions attribuables à l'une quelconque des

      I. Fonctionnement normal
      II. Fin de la cuisson
      III. Conditions de pré-allumage
      IV. Risque de blessure
      V. Feu

**8.** Procédé selon la revendication 7, dans lequel les critères pertinents comprennent un ou plusieurs des éléments suivants :

      VI. températures globales acceptables pour cette région
      VII. différences de température acceptables à l'intérieur de cette région
      VIII. taux acceptables de changement de température

IX. fluctuations globales acceptables de la température pour cette région

X. les fluctuations acceptables de température dans cette région

XI. temps acceptable d'exposition à une température prédéterminée ou à une plage de températures prédéterminée

XII. changements de forme de cette région

XIII. critères basés sur l'historique de température de cette région

XIV. Critères basés sur le type de source de chaleur présente dans la table de cuisson

XV. Critères basés sur la présence de l'utilisateur

XVI. Critères fournis comme pertinents pour la cuisson d'un aliment sélectionné

XVII. temps acceptable écoulé entre le retrait de la première batterie de cuisine dans la première région et la mise en place de la deuxième batterie de cuisine dans la deuxième région

XVIII. changement de forme acceptable pour cette région

XIX. Contenu acceptable de l'ustensile de cuisine

XX. changement acceptable de position de l'ustensile de cuisine.

9. Procédé selon l'une quelconque des revendications précédentes, dans lequel les réponses prédéterminées comprennent une ou plusieurs des éléments suivants :

- fourniture d'indicateurs visibles de l'état de cette région
- fourniture d'indicateurs sonores de l'état de cette région
- fourniture d'indicateurs haptiques de l'état de cette région
- transmission d'informations concernant cette région à un ou plusieurs dispositifs de communication spécifiés
- Transmission d'informations concernant cette région à un endroit éloigné
- Contrôle de la chaleur générée par une source de chaleur dans la plaque de cuisson
- Désactivation de la plaque de cuisson
- l'activation des mesures de prévention et/ou d'extinction des incendies,

10. Procédé selon l'une quelconque des revendications précédentes, dans lequel :

Les réponses prédéterminées varient selon que la présence d'un utilisateur est détectée ou non ; et/ou

les réponses prédéterminées peuvent être modifiées par l'entrée de l'utilisateur ; et/ou

dans lequel est stocké un historique des réponses de l'utilisateur aux réponses prédéterminées et d'autres réponses varient en fonction de cet historique des réponses.

11. Procédé selon l'une quelconque des revendications précédentes, dans lequel la pluralité d'images infrarouges est accessible à partir d'un ou de plusieurs capteurs d'imagerie thermique disposés à prendre des images de la plaque de cuisson et où des informations indiquant l'état d'au moins une des régions sont affichées visuellement sur un écran.

12. Système de surveillance de l'utilisation d'une plaque de cuisson, comprenant :

a) au moins un capteur d'imagerie thermique,

b) au moins un processeur de données configuré pour mettre en oeuvre le procédé selon l'une quelconque des revendications précédentes, et

c) au moins un périphérique de stockage de mémoire.

13. Système selon la revendication 12, comprenant en outre un ou plusieurs des éléments suivants :

un écran d'affichage configuré pour fournir des indicateurs visibles de l'état de la table de cuisson et/ou des régions de la table de cuisson

un dispositif de sortie sonore pour fournir des indicateurs sonores de l'état de la table de cuisson réactifs à la sortie du dispositif de traitement de données

un périphérique d'entrée utilisateur.

14. Système selon l'une quelconque des revendications 12 à 13, dans lequel le processeur de données est en communication avec la table de cuisson et peut contrôler les sources de chaleur dans la table de cuisson.

15. Système selon l'une quelconque des revendications 12 à 14, configuré pour transmettre des données à un ou plusieurs dispositifs de communication spécifiés et/ou à un emplacement distant

## Fig.1

## Fig.2

# Fig.3

# Fig.4

# Fig.5

# Fig.6

## Fig.7

## Fig.8

# Fig.9

# Fig.10

# Fig.11

# Fig.12

Fig.13

Fig.14

Fig.15

# Fig.16
# (part 1 of 3 )

Operating

2 (all Pixels<HOB-ON_THRESH)

Sleep

go Back To Sleep

(time Elapsed> REPEAT_ INTERVAL) measure Temperatures

(any Pixels> HOB_ON THRESH)    1

monitoring

detect Pan entry: located Pan Centre measure Tp

(Tp Stabilises <T_BOIL)

pan Temperature Rising

(Tp>T_ BOIL)

1

2

Boiling Pan entry: measure Ave Stable Temp

frying Pan

(Tp>ave Stable Temp + OVER_ STABLE_ TEMP_THRESH)

(Tp> FRYINGPAN_ OVERHEAT_ THRESH)

alert Pan Boiled Dry

alert Frying Pan Over Heat

(anyPixel> HOB_ OVERHEAT_ THRESH & timer Elapsed < 5)

hob Left ON

3

2

1

( noPixels> HOB_ OVERHEAT_ THRESH)

(user Present & timeout> HOB_ON_ USER_ PRESENT)

(user Not Present & timeout > HOB_ON_NO_ USER_PRESENT)

alert Hob Left On

# Fig.16 (part 2of 3 )

(all Pixels <
HOB_ON_
THRESH)

sleep

go
Back To
Sleep

1

2

(time Elapsed>
REPEAT_
INTERVAL)

operating

1

(any Pixels >HOB_ON_
THRESH)

2

(any Pixels> HOB_
ON_THRESH)

detect Pan
entry: locate Pan Centre
measure Tp

pan
Temperature
Rising

(Tp Stabilises < T_BOIL)

1

2

(Tp>T_BOIL)

Boiling Pan
entry :
measure Ave Stable Temp

frying
Pan

(Tp...
FRYINGPAN_
OVERHEAT_
THRESH)

(Tp>ave Stable Temp+
OVER_STABLE_TEMP_
THRESH)

alert Pan Boiled Dry

alert Frying Pan Over Heat

(any Pixel>HOB_OVERHEAT_THRESH...
& time Elapsed<5)

3

Hob Left On

2

(user Present=
TRUE &...timeout>
HOB_ON_USER_PRESENT)

1

(user Not Present = TRUE &...timeout>
HOB_ON_NO_USER_PRESENT)

Alert Hob Left On

33

# Fig.16
## (part 3 of 3)

# Fig.17

13-Apr-2017 17:42:53

# Fig.18

## Fig.19

## Fig.20

**REFERENCES CITED IN THE DESCRIPTION**

**Patent documents cited in the description**

- US 20150196161 A1
- EP 3336436 A
- DE 102014220273
- WO 2013026766 A
- US 20050265423 A
- WO 2018163073 A
- EP 3258175 A1
- GB 1711491 A